# EUROPEAN PATENT SPECIFICATION

(11) **EP 3 126 934 B1**
(45) Date of publication and mention of the grant of the patent: **11.12.2019**
(21) Application number: 15716684.4
(22) Date of filing: 02.04.2015
(51) Int. Cl.: G06F 3/01, B60K 35/00, B60K 37/06, G06F 3/038, G06K 9/00

(54) **SYSTEMS AND METHODS FOR THE DETECTION OF IMPLICIT GESTURES**
SYSTEME UND VERFAHREN ZUR DETEKTION VON IMPLIZITEN GESTEN
SYSTÈMES ET PROCÉDÉS DE DÉTECTION DE GESTES IMPLICITES

(30) Priority: 03.04.2014 US 201414244790; 18.09.2014 US 201414490591; 13.10.2014 US 201462063340 P
(43) Date of publication of application: 08.02.2017
(73) Proprietor: Honda Motor Co., Ltd., Tokyo 107-8556 (JP); Edge 3 Technologies Inc., Phoenix, AZ 85016 (US)
(72) Inventor: EL DOKOR, Tarek, A., Phoenix, AZ 85016 (US); KING, Joshua, Phoenix, AZ 85016 (US); CLUSTER, Jordan, Phoenix, AZ 85016 (US); HOLMES, James, E., Phoenix, AZ 85016 (US); YAMAMOTO, Stuart, Raymond, OH 43067 (US)
(74) Representative: Weickmann & Weickmann PartmbB
(86) International application number: PCT/US2015/023992
(87) International publication number: WO 2015/153835

(56) References cited:
- EP-A1- 2 518 447
- DE-A1-102007 025 352
- US-A1- 2011 286 676
- US-A1- 2013 339 027
- SCHMIDT A: "Implicit human computer interaction through context", PERSONAL TECHNOLOGIES, SPRINGER, LONDON, GB, vol. 4, no. 2-3, 31 December 2000 (2000-12-31), pages 191-199, XP002432574, ISSN: 0949-2054, DOI: 10.1007/BF01324126

## Description

### FIELD OF THE INVENTION

The present disclosure generally relates to a method and system for automobile cockpit analytics and, more particularly, to methods and systems for recognizing gestures made within a vehicle.

### CROSS-REFERENCE TO RELATED APPLICATIONS

This application claims priority to provisional United States Patent Application Serial No. 62/063,340 filed Oct. 13, 2014, which is a continuation-in-part of United States Patent Application Serial No. 14/490,591 filed on September 18, 2014, and entitled "SYSTEMS AND METHODS FOR GLOBAL ADAPTATION OF AN IMPLICIT GESTURE CONTROL SYSTEM," which is a continuation-in-part of U.S. Patent Application Serial No. 14/244,790 filed on April 3, 2014, and entitled "SYSTEMS AND METHODS FOR THE DETECTION OF IMPLICIT GESTURES."

### BACKGROUND

Modern speech and gesture systems often demand a user's attention, drawing their eyes away from critical tasks and, sometimes, affecting their behavior as they engage in activities as simple as watching TV or as complex as operating a vehicle. This demand placed on the user's attention taxes the cognitive load that is associated with various actions required of a user, thereby making it difficult to multitask safely while operating such systems during operation of a vehicle, for instance. Furthermore, current systems often require specific and un-intuitive gestures or voice commands to be performed by a user to enable a desired function. Such un-intuitive gesture and voice commands further tax the cognitive load placed on a user as they must turn their focus to remembering and performing the required gesture or voice command to enable the desired feature. This increase cognitive load can reduce a user's ability to focus on the current activity at hand.

Cognitive load placed on a user can represent the combined impact of several factors. One such factor can be an intrinsic component of the cognitive load (I), which can depend partially or completely on the complexity and difficulty level associated with a task, and the associated memory that needs to be allocated to it. Another factor can be the germane load (G) that is associated with learning a new skill. Finally, an extraneous factor (E), such as how information is presented to a user, can affect cognitive loading, particularly where a complex series of mental schemata is required to represent the information in the brain. The total cognitive load (T) is then the sum of these factors, I, G, and E. These factors illustrate why cognitive loading is so high in existing systems. Both the germane and conscious efforts involved in performing the learning process of a modern speech control system can be hampered by presenting the user with a discouraging experience. More importantly, modern user interface systems can require navigation through multiple layers, such that the extraneous load placed on the users becomes very challenging. Therefore, adding an additional primary activity that is required to access the layered data can force the cognitive schemata that is associated with all the different user interface layers to become significantly challenging to users.

Additionally, modern voice and gesture systems are generally cumbersome to use and slow to react. Furthermore, modern speech and gesture systems are often too primitive or clumsy to actually discern the true intention of the user. This inability of current voice and gesture systems to efficiently and easily recognize the intention of the user can result in not only an increase in the cognitive load of the user, but also in frustration and distraction, potentially increasing the danger associated with performing certain acts while simultaneously operating a vehicle. This increase in applied cognitive load is a major problem that has resulted in slow and difficult adoption and integration of voice and gesture systems into the daily lives of consumers and users.

Finally, complex modern devices, such as automobiles, present a user with a multitude of distractions. The more that technology advances, with more options being presented to users, the more the cognitive load of a user, such as a driver of an automobile, is increased. This increase in cognitive load, combined with the additional distractions associated with operating multiple functions while driving, can result in the user being substantially distracted when performing operations other than those purely related to operating the vehicle.

DE 10 2007 025 352 A1 discloses a method for enabling a learning implicit gesture control by an occupant of a vehicle according to the preamble of claim 1 and an implicit gesture learning system according to the preamble of claim 8.

US 2011/286676 A1 discloses a method and system for performing gesture recognition of a vehicle occupant employing a time of flight (TOF) sensor and a computing system in a vehicle.

US 2013/339027 A1 discloses a method or system for selecting or pruning applicable verbal commands associated with speech recognition based on a user's motions detected from a depth camera. Depending on the depth of the user's hand or arm, the context of the verbal command is determined and verbal commands corresponding to the determined context are selected.

EP 2 518 447 A1 discloses a system, method, and computer program product for allowing a user to fix errors in a user input.

SCHMIDT A, "Implicit human computer interaction through context", PERSONAL TECHNOLOGIES, SPRINGER, LONDON, GB, 31. December 2000 (2000-12-31), vol. 4, no. 2-3, pages 191 - 199, XP002432574, ISSN: 0949-2054, DOI: 10.1007/BF01324126, discusses how the availability of processing power and advanced sensing technology can enable a shift in "human-computer interaction" from explicit interaction, such as direct manipulation GUIs, towards a more implicit interaction based on situational context. In the paper it is further discussed how situational context can be exploited to improve input and output of mobile devices.

The above issues demonstrate the need for a speech and gesture system and method that can be implemented without increasing the cognitive load placed on a user when performing an operation, such as a operating a vehicle.

### SUMMARY

The present invention provides a method for enabling a learning implicit gesture control as defined in appended claim 1, and an implicit gesture learning system as defined in appended claim 8. Preferred embodiments are defined in the dependent claims.

In one embodiment, a method includes monitoring a plurality of system inputs, detecting a behavioral pattern performed by a user and associated with the plurality of system inputs, and, when the behavioral pattern is detected, associating, in a memory, a gesture with at least one action, the at least one action being determined by the plurality of system inputs. The method includes, upon detecting the gesture, executing the action associated with the gesture.

In another embodiment, a system includes a processor, the processor in communication with a plurality of sensors coupled to a vehicle. The processor is configured to perform the steps of monitoring a plurality of system inputs, detecting behavioral patterns associated with the plurality of system inputs, prompting a user to perform a gesture, the gesture associated with the detected behavioral patterns, and executing an action associated with the gesture when the gesture is performed by the user.

### DESCRIPTION OF THE DRAWINGS

FIG. 1 is a block diagram illustrating functional components of an embodiment of a implicit gesture learning system.
FIG. 2 is a flowchart depicting an embodiment of an implicit gesture learning process.
FIG. 3 depicts an example of the implicit gesture learning process of FIG. 2.
FIG. 4 is an illustration showing a feature extraction process.
FIG. 5 is a flowchart showing a progressive learning process.
FIG. 6 is a flowchart illustrating a gesture control process.
FIG. 7 depicts an example application of the present implicit gesture learning system.
FIG. 8 depicts a message that may be depicted by the implicit gesture learning system.
FIG. 9 is a block diagram depicting functional elements of a cloud-based implicit gesture learning system.
Fig. 10 is a block diagram depicting a self-healing process for an implicit gesture learning system.
FIG. 11 is a block diagram depicting functional elements of a centralized implicit gesture learning system.
FIG. 12 is a block diagram depicting a global system update process.
FIG. 13 is a block diagram depicting a local environment system update process.
FIG. 14 is a block diagram depicting an individual user update process.
FIG. 15A is a block diagram depicting a user initiated tutorial program.
FIG. 15B depicts an example implementation of teaching basic gesture operation.
FIG. 15C depicts an example implementation of teaching certain gestures from a predefined list.
FIG. 16A is a block diagram depicting a predetermined gesture teaching process.
FIG. 16B is an exemplary illustration showing possible predetermined gestures.
FIG. 17 is a block diagram depicting a system initiated tutorial program.
FIG. 18 is a block diagram depicting a smart gesture control tutorial system.
FIG. 19 is an exemplary grid of predefined gesture glyphys.

### DETAILED DESCRIPTION

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting.

Additionally, as this disclosure is directed to an implicit gesture learning system **100** and method, it should be recognized that "gesture" can designate any type of potential input, including, but not limited to, hand movements, body movements, spoken words, or various other bio-metric observations of a user or other actions or activities undertaken by a user, whether intentional or unintentional.

In one embodiment, the present technology can be directed to a system and method for reducing the cognitive load of motor vehicle operators. Although, it should be known that the systems and methods described herein can be used to reduce the cognitive load of users in challenging environments other than motor vehicles. The user's cognitive load can be reduced via systems and methods that learn and constantly improve and adapt to the users behavior.

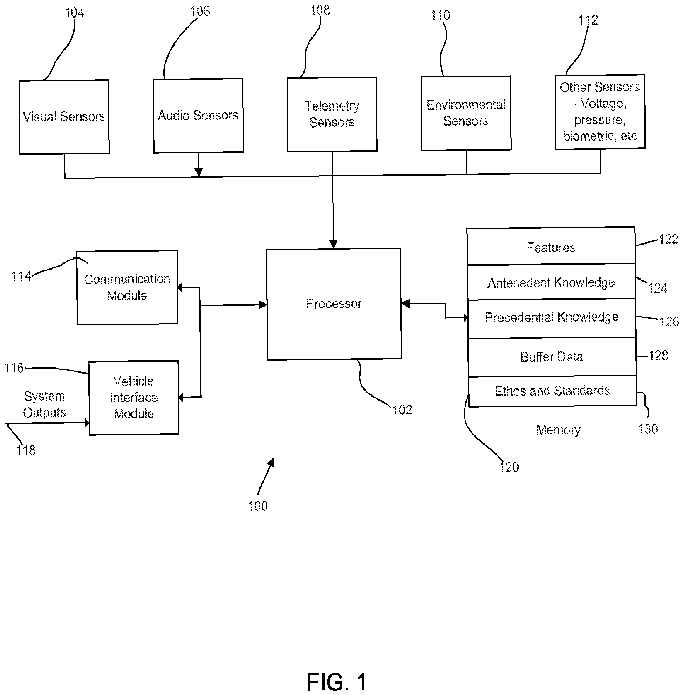

FIG. 1 illustrates a possible embodiment of an implicit gesture learning system **100.** The implicit gesture learning system **100** can contain a processor **102.** The processor **102** can have multiple I/O ports to accept information from multiple systems in the vehicle. The processor **102** can also be configured to implement processes such as an implicit gesture learning process **200** or an implicit gesture control process **450** which are discussed in more detail below. The processor **102** can also be configured to implement other processes as are necessary for the operation of the herein described system and method. The implicit gesture learning system **100** can include multiple sensor devices. Non-limiting examples of possible sensing devices include visual sensors **104.** Visual sensors **104** can be a charge-coupled devices ("CCD") or complimentary metal oxide semiconductor ("CMOS")-based devices. Alternatively, the visual sensors **104** can be stereoscopic sensors. The visual sensors **104** can also be one or more infrared (IR) type sensors that may be mounted about an interior of a vehicle. In one embodiment, the implicit gesture learning system **100** can contain multiple types of visual sensors **104.** The visual sensors **104** can be coupled to a vehicle to view the passenger compartment of the vehicle. In one embodiment, multiple visual sensors **104** can be positioned to observe separate portions or areas of the passenger compartment of the vehicle. The visual sensors **104** can also be coupled to the vehicle such that the visual sensors **104** have a field of view that is all or partially outside the vehicle. In one embodiment, multiple visual sensors **104** can be coupled to the vehicle to provide a field of view outside of the vehicle that provides a 360 degree viewing angle outside of the vehicle. However, the visual sensors **104** can be coupled to provide a viewing angle less than 360 degrees. The visual sensors **104** can be used to detect visual objects both inside and outside of the vehicle. In one embodiment, the visual sensors **104** can be used to detect an explicit gesture of a driver or other occupant in a vehicle. In a further embodiment, the visual sensors **104** can be used to detect implicit gestures of a driver or other occupant in a vehicle.

The implicit gesture learning system can also contain audio sensors **106.** The audio sensors **106** can be mono or stereo microphones. The audio sensors **106** can also contain noise cancellation or active noise reduction (ANR) technology to filter road and engine noise. In one embodiment, the audio sensors **106** can be located inside the passenger compartment of a vehicle. Alternatively, the audio sensors can also be located outside of the passenger compartment of a vehicle. In one embodiment, the audio sensors **106** can be located inside the passenger compartment of a vehicle and can be used to detect an audio command of a driver or other occupant of a vehicle.

The implicit gesture learning system **100** can also contain telemetry sensors **108.** Non-limiting examples of telemetry sensors **108** can include weather sensors, such as temperature or humidity sensors. The telemetry sensors **108** can also include traffic condition sensors. Telemetry sensors **108** can also include accelerometers or other sensors configured to measure a configuration, attitude, position, speed, velocity, orientation, and the like. In one embodiment, a vehicle can include multiple telemetry sensors of varying types as required. Additionally, the gesture system can also contain separate environmental sensors **110.** Non-limiting examples of environmental sensors **110** can include illumination sensors, wind sensors, or other environmental sensors **110** configured to measure one or more environmental conditions either outside or inside the vehicle.

The implicit gesture learning system **100** can also contain supplementary sensors **112** as needed. Non-limiting examples of supplementary sensors can include pressure sensors, biometric sensors, voltage sensors, current sensors, etc. The supplementary sensors **112** can be used to supplement the other sensors of the implicit gesture learning system **100** by providing more detailed information where needed.

The processor **102** of the implicit gesture learning system **100** can also be coupled to a communication module **114.** The communication module **114** can be used to interface the implicit gesture learning system **100** with a cellular phone or other communication device. The communication module **114** can also be used to communicate with other external devices or networks. In one embodiment, the communication module **114** can include a Bluetooth® communication system for communicating with cellular phones or other portable electronic devices. The communication module **114** can also communicate with external cellular networks such as those operating using LTE, 4G, 3G or other cellular communication protocols as are known in the art. The communication module **114** can also be equipped to operate using a Wi-Fi connection such as IEEE 802.11-type networks. Additionally, the communication module **114** can also be capable of receiving information from Global Positioning Satellites ("GPS"). Positional information can be received via the GPS by the communication module **114.**

The processor **102** of the implicit gesture learning system **100** can also be coupled directly to the vehicle via a vehicle interface module **116.** The vehicle interface module **116** can allow the implicit gesture learning system **100** to have access to vehicle information such as speed, rpm, engine temp, etc. Furthermore, the vehicle interface module **116** can allow for communication between all of the vehicle systems and the implicit gesture learning system **100.** Non-limiting examples include communication with the infotainment system, the climate control system, power windows, power locks, internal lighting, or other system as is known in the art. Additionally, via the vehicle interface module **116,** the implicit gesture learning system **100** may be able control certain systems of the vehicle such as infotainment, climate control and other systems. In some embodiments, the implicit gesture learning system **100** can be limited to only controlling those vehicle systems that could not affect the safety of operating the vehicle, but may be extended to safety features as well. The vehicle interface module **116** can communicate with the vehicle via an industry standard communication protocol such as CAN or CAN Open. Alternatively, the vehicle interface module **116** can communicate with the vehicle via any communication protocol as is known in the art. Additionally, the vehicle control system **116** can detect the presence of a vehicle output **118.** The vehicle output **118** may include the outputs of one or more vehicle systems that may indicate a current status of the system, as well as an indication of whether any user interfaces of the vehicle systems have been activated. For example, in the case of a power window, the system outputs may indicate a current status of the power window (e.g., 50%, fully closed, currently opening, currently closing) and an indication of whether the power window button is current activated (and in what direction). Similarly, in the case of a reading light, the system output may indicate a current status of the light (e.g., on, off, 50% brightness) and an indication of whether the reading light button has been pressed.

The processor **102** of the implicit gesture learning system **100** can also be coupled to a memory device **120.** The memory device **120** can store information related to features **122,** antecedent knowledge **124,** precedential knowledge **126,** and buffer data **128,** as well as information related to ethos and standards **130.** This data will be discussed in more detail below.

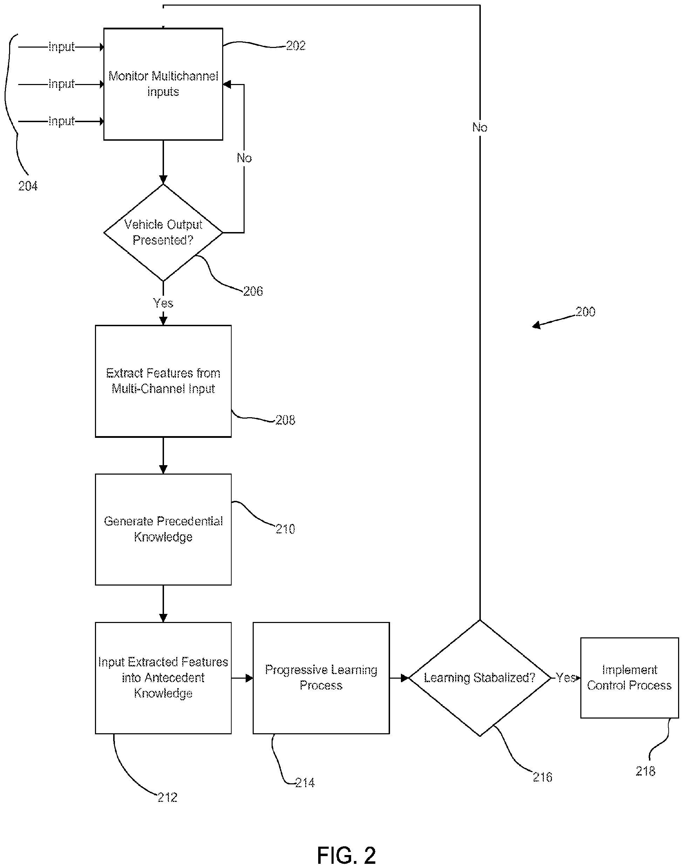

Turning now to FIG. 2, an embodiment of an implicit gesture learning process **200** of an implicit gesture learning system **100** can be seen. In one embodiment, the implicit gesture learning process **200** is always active. By presenting an implicit gesture learning process **200** that is preferably constantly active, the implicit gesture learning system **100** is adapted to better predict a user's behavior. In one embodiment, the implicit gesture learning process **200** is preferably executed by and can allow the implicit gesture learning system **100** to detect and interpret implicit gestures. Implicit gestures can be defined by their minimalist cognitive load required to perform, or otherwise as gestures performed by a user in response to one or more external stimuli, and not in response to a predefined training process or required particular motion or gesture for indicating an input to a system. In one embodiment, implicit gestures can be determined based on repeated actions of a user when performing certain operations. In other embodiments, routine user habits can also be interpreted as implicit gestures. In one embodiment, an implicit gesture may demonstrate the following features:
1) A lower cognitive load than deliberate and explicit gesture recognition, in which action and reaction are clearly defined and delineated by system inputs/outputs
2) The lower cognitive load is lower in every aspect, intrinsic, germane, and extraneous components of the load
3) A trigger point defined by a system level consequence, preceded by a set of extracted visual, audio, and other features extracted by an intelligent feature extractor
4) A habitual act or behavior that is extracted through a feature extractor tool
5) A low cognitive load target that is associated naturally with habitual user behavior
6) An extracted knowledge of that habitual behavior through an intelligent feature extractor
7) An extracted outcome associated with that behavior through a behavior monitoring system and the association of that system's outcomes
8) A prediction step associated with that behavior.

In one embodiment, ethos-based rules can be put into place to ensure that such a system does not encourage or reinforce negative behavior. The system may also be configured to find ways with which to learn from its own mistakes and be self-healing. One example of the latter can occur when the system is "corrected" by turning off an action the system has completed or initiated, and the user turning on an alternate action. In vehicular environments, safety and concentration is of paramount importance. One important aspect of this system is its ability to identify negative behavior and discourage it.

At process block **202** the implicit gesture learning process **200** can constantly monitor a plurality of inputs **204.** The plurality of inputs **204** can be provided from the multiple sensor devices of the implicit gesture learning system **100.** The plurality of inputs **204** can also be provided from the communication module **114** or other modules. The vehicle interface module **116** can also provide a plurality of inputs **204.** Non-limiting examples of possible inputs **204** can be, monitoring a user's torso postures through the visual sensors **104;** monitoring and/or tracking a user's hands through the visual sensors **104;** eye detection of multiple users through the visual sensors **104;** voice and/or speech monitoring at all times through the audio sensors **106;** identification of contact zones between users and the cockpit of the vehicle through the visual sensors **104** and/or the supplementary sensors **112;** or, identification of objects external to the vehicle that are in contact with the vehicle environment through the visual sensors **104,** telemetry sensors **108** or environmental sensors **110.** Additionally, other non-limiting examples of inputs can be gathered through integration of other subsystems in the vehicle environment, including, but not limited to, smart-phones, tablets, personal computers or other personal electronic devices via the communication module **114.** Environmental information can also be monitored via other environmental sensors **110.** Available environmental information can include location, weather, traffic conditions or other information, external or internal to the cockpit, that can be presented to the implicit gesture learning system **100** via the telemetry sensors **108.** Environmental information can also be gathered from the environmental sensors **110.** Other environmental information can also be gathered through external systems such as Radio Data Systems (RDS) or Global Positioning Systems (GPS) via the communication module **114.** A further example of an input can be a driver of a vehicle exhibiting signs of stress during tense driving conditions detected by the supplementary sensors **112** such as biometric or optical sensors.

In certain embodiments, the implicit gesture learning process **200** can divide the plurality of inputs **204** into discrete categories. In one embodiment, the implicit gesture learning process **200** can categorize the plurality of inputs **204** based on the type of sensor used. In another embodiment, the implicit gesture learning process **200** can categorize the inputs **204** based on the priority associated with the particular input **204.** Prioritization of the plurality of inputs **204** can be learned in a similar manner to the learning of implicit gestures. One example learning process is through the use of a deep belief network, comprised of generalist and specialist subnets.

Continuing with FIG. 2, the implicit gesture learning process **200** can constantly monitor the plurality of inputs **204** at process block **202.** Additionally, at process block **206** the implicit gesture learning system **100** can determine if a vehicle output **118** has been triggered. If a vehicle output **118** has not been triggered, the system will continue to monitor the plurality of inputs **204** until a vehicle output **118** is triggered.

Vehicle outputs **118** can be comprised of a variety of possible outputs and generally represent the activation of a feature of an in-vehicle system. Non-limiting examples of possible vehicle outputs **118** can be the activation of a navigation action; a button press resulting in a routine action for the vehicle (i.e. door locks, window actuation, etc.); or, any other system output that can be discerned as a vehicle output **118** by the occupants of the vehicle. Other possible non-limiting examples of vehicle outputs **118** can be related to the actions of the occupants within the vehicle. An example of a possible action by the occupants that could be vehicle outputs **118** can be reactions to external stimuli such as an occupant shielding their eyes from direct sunlight by lowering a visor. In order to determine that particular actions of an occupant of the vehicle constitute vehicle outputs **118,** the implicit gesture learning system **100** may be pre-programmed with a number of gestures that constitute vehicle outputs **118.** In other embodiments, the gestures that can result in vehicle outputs **118** may instead be learned over time by the implicit gesture learning process **200** and preempted by the implicit gesture learning system **100.** It should be known that the above vehicle outputs **118** can also be system inputs **104** into the implicit gesture learning system **100,** such as a user actuating a button to lower or raise a window.

In a further embodiment, subsets of the vehicle outputs **118** can also be monitored. Non limiting examples of subsets of the vehicle outputs **118** can include voltage levels, analog measurements, intermediate values or any other value associated with a given vehicle output **118.** In one embodiment, any of the plurality of inputs **204** that can be determined to be relevant to the problem of associating a given set of vehicle outputs **118** with a given set of multiple inputs **204** can be extracted.

Turning now to process block **208,** once a vehicle output **118** has been presented, the implicit gesture learning process **200** can attempt to extract features **122** from the plurality of inputs **204** associated with the presented vehicle output **118.** In one embodiment, features **122** can be extracted from multiple inputs **204** that are associated with a vehicle output **118.** As described below, the features **122** may be extracted from inputs **204** that were received in some time period (e.g., a number of seconds) before and/or after the vehicle output **118** was presented at step **206.** Alternatively, the features **122** may be extracted from inputs **204** that accumulated over time. Accordingly, the extracted features **122** may have occurred before or after the existence of the vehicle output **118.** The extracted features **122** may constitute any values found within input **204** that fall outside of noise levels normally associated with the input **204.** Accordingly, in the case of where input **204** involves data describing a movement of an occupant of the vehicle, a feature may include a distinctive motion of the occupant that falls outside of the steady-state movements of the occupant. Features **122** can also be extracted using a deep belief network comprised of a deep generalist network, a deep monitoring network, and a deep specialist network.

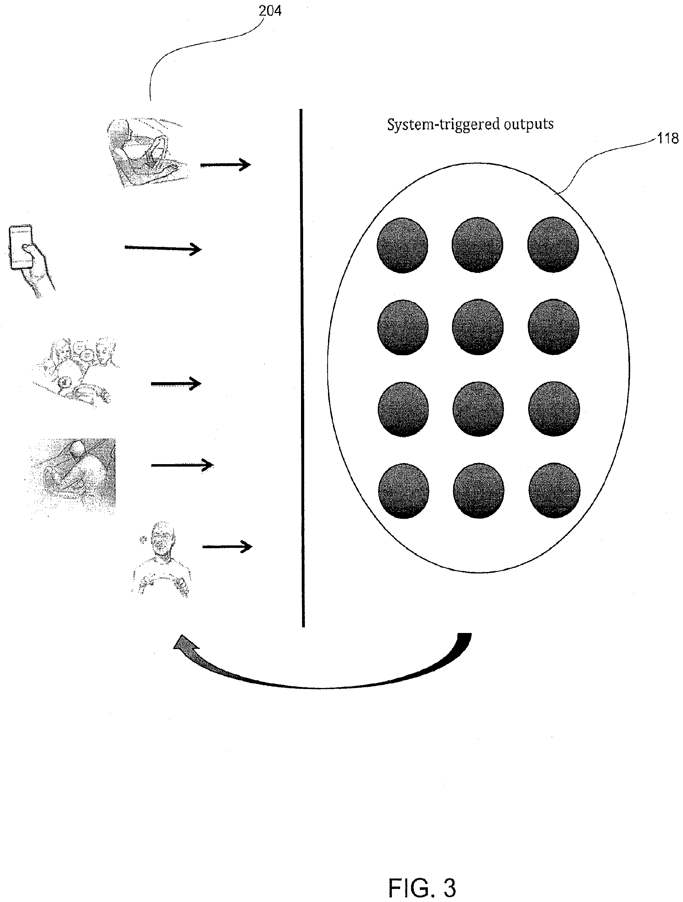

FIG. 3 illustrates a basic example of the implicit gesture learning process **200** of the implicit gesture learning system **100.** The plurality of inputs **204** (e.g., comprising many different input channels) are presented to the implicit gesture learning system **100.** Once vehicle outputs **118** are triggered and presented to the implicit gesture learning system **100,** the implicit gesture learning process **200** can review the plurality of inputs **204** associated with the vehicle outputs **118** and extract features **122** based on the plurality of inputs **204.** The extracted features **122** can then be stored in the memory **120** of the implicit gesture learning system **100.** In one embodiment, the extracted features **122** can include the plurality of inputs **204** that were presented within a predetermined time of the vehicle output **118** being presented. The predetermined time can be fixed during initial production of the implicit gesture learning system **100.** Alternatively, the implicit gesture learning system **100** can vary the predetermined time in order to broaden or narrow the plurality of inputs **204** that can be associated with a presented vehicle output **118** based on the type of input **204** being monitored.

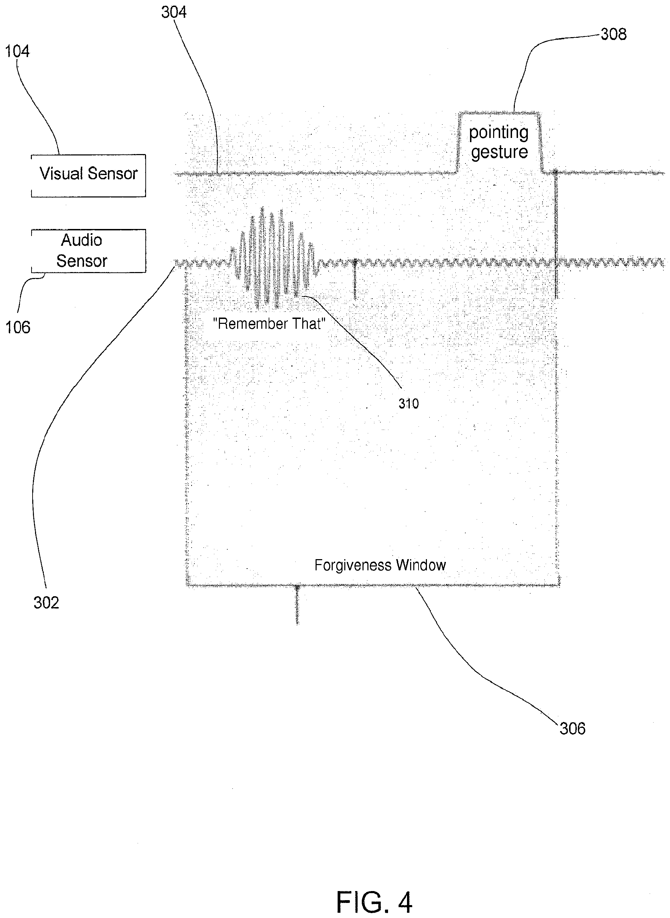

Turning to FIG. 4, a non-limiting example of the feature extraction process **208** can be seen. In this example, a visual sensor **104** and an audio sensor **106** are being monitored by the implicit gesture learning system **100.** The audio sensor **106** can be in an always-on condition. However, as conversations can be common inside a vehicle, the implicit gesture learning system **100** may not perform any action associated with an audio input signal **302** presented by the audio sensor **106** until a secondary input, such as a visual input signal **304** is detected by the visual sensor **104** causing a vehicle output **118** to occur. In some examples, the implicit gesture learning system **100** may not perform any action associated with an audio input signal **302** presented by the audio sensor **106** until a secondary input, such as a visual input signal **304** is detected, after having learned from previous examples that the audio input signal **302** is not indicative of a desired vehicle output **118.** In one embodiment, the implicit gesture learning system **100** can store data from the plurality of inputs **204** in a buffer **128.** The buffer can be in the form of a forgiveness window **306.** In one embodiment, the forgiveness window **306** can have duration of about one second to about two seconds. In alternative embodiments, the forgiveness window **306** can have a duration that is determined based on the type of input **204** being monitored. The forgiveness window **306** can allow the implicit gesture learning system **100** to evaluate the plurality of inputs **204** that immediately precede a vehicle output **118** being detected.

In one example, the vehicle output **118** can be a pointing gesture **308** captured by the visual sensor **104.** Once the vehicle output **118** has been detected by the implicit gesture learning system **100,** the implicit gesture learning system **100** can evaluate the plurality of inputs **204** that were presented to the implicit gesture learning system **100** and fall within a forgiveness time window **306** of that implicit gesture learning system **100.** In the present example an audio voice command **310** of "Remember That" falls within the forgiveness window **306** and the implicit gesture learning process **200** can extract the audio voice command **310** "Remember That" as a feature **122.** Subsequently, based on other presented inputs **204,** the implicit gesture learning system **100** can determine what the user is pointing at (e.g., using positioning data from, for example, a GPS system, and vehicle attitude and/or orientation data captured from, for example, telemetry sensors), and subsequently store related information in the memory device **120.**

Returning to FIG. 2, once the implicit gesture learning process **200** has extracted the features **122** associated with a vehicle output **118** at process block **208,** the implicit gesture learning process **200** can then proceed to process block **210.** At process block **210,** the implicit gesture learning process **200** can generate precedential knowledge **126.** In one embodiment, precedent knowledge **126** can be knowledge generated in a window of forgiveness that immediately precedes a detected vehicle output **118.** This precedential knowledge **126** can be used to associate extracted features **122** with a vehicle output **118.** In one embodiment, the extracted feature **122** relating to precedential knowledge **126** can be an explicit gesture such as a voice command or hand signal, or a combination of the same. In another embodiment, the extracted feature **122** can be in the form of an implicit gesture. An implicit gesture can be defined as natural behaviors of a vehicle occupant that are learned by an unsupervised system which are triggered by a series of repeatable system outputs, harnessing antecedent multichannel input features, and defined by natural and intuitive human motion. As will be seen in more detail below, precedential knowledge **126** based on implicit gestures can be used by the implicit gesture learning system **100** to anticipate a desired vehicle output **118** based on monitored inputs **204.** In one embodiment, the implicit gesture learning system **100** can generate precedential knowledge **126** by comparing extracted features **122** against antecedent knowledge **124** stored in the memory device **120.**

At process block **212,** the implicit gesture learning process **200** can compare the current extracted features **122** against antecedent knowledge **124** contained in the memory device **120.** In one embodiment, the implicit gesture learning process **200** can input current extracted features **122** into the antecedent knowledge **124.** The antecedent knowledge **124** can be a plurality of previously extracted and stored features **122** associated with a given vehicle output **118.** In another embodiment, the antecedent knowledge **124** can be knowledge stored from deep learning through a generalist network, a specialist network, and a monitor network. The comparison may involve determining whether the presently-identified set of features has been associated with particular vehicle outputs **118** in the past.

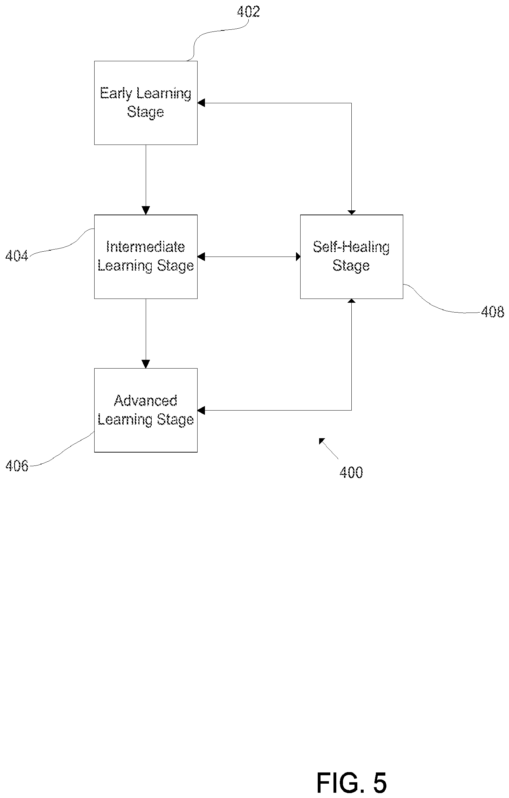

At process block **214,** the precedential knowledge **126** can be input into a progressive learning process **400** which would eventually constitute antecedent knowledge **124.** FIG. 5 shows an embodiment of the progressive learning process **400** in the form of a phased learning sequence. The progressive learning process **400** can have three stages of learning; specifically, an early learning stage **402,** an intermediate learning stage **404** and an advanced learning stage **406.** The early learning stage can extract broad features **122** from the plurality of inputs **204** such as features **122** relating to body posture, eye movements, object tracking, etc. as non-limiting examples associated with the generated precedential knowledge **126.** The intermediate learning stage **404** can extract a subset of features **122** from the features **122** extracted during the early learning stage **402.** Finally, the advanced learning stage **406** can further reduce the subset of features **122** extracted in the intermediate learning stage **404** and early learning stage **402.** By reducing the features **122** associated with a desired vehicle output **118,** the implicit gesture learning system **100** can react more quickly to a user's behavior. Additionally, in one embodiment, a self-healing stage **408** can determine if certain features **122** have been incorrectly extracted and associated with a desired vehicle output **118.** The self-healing stage **408** can alter the extracted features **122** associated with a desired vehicle output **118.** In certain embodiments, the self-healing stage **408** can cause the progressive learning process **400** to return to the intermediate learning stage **404** or early learning stage **402** as necessary. In one embodiment, the implicit gesture learning system **100** can determine if a certain feature has been incorrectly extracted and associated with a desired vehicle output **118** by determining that a user has turned off or corrected the vehicle output **118** generated by the implicit gesture learning system **100.** To illustrate, Table 1, below, illustrates the different learning stages of a implicit gesture learning system **100** configured to detect when a user is attempting to read within the vehicle and then automatically turn on an overhead reading light.

Self-healing can also be accomplished by a subsystem of a vehicle, house, or any ecosystem of subsystems connected in the Internet of Things. For instance, if a related subsystem is negatively impacted by the implicit gesture learning system's response, it may choose to override such a response, or provide feedback to main deep learning subsystem. In this case, self-healing is done in a completely non-human fashion, i.e. no human initiated response or input is in the decision loop.

**Table 1**

| **Learning Features** | **Features Extracted** | **Manifestation** | **Required Trigger Event** |
|---|---|---|---|
| Early Learning | Features relating to body posture, eye tracking, object tracking, orientation, and other features. | User reaches up/out to turn the light on (and) User looks up (and) User opens a book (and) User drops their head | Turning Light on |
| Intermediate Learning | More features from the ones listed above, and deeper, more specialized features. | Two of the three: User reaches up/out, looks up, opens a book. | None |
| Advanced Learning | Unknown. Features of features extracted by the system feature learner. Reduced set. | Any of the three. | None |
| Advanced Learning/Self Healing | A bigger set of features | Any combination of the three. | Turning light off, setting another system output |

At process block **216,** the implicit gesture learning process **200** can evaluate whether the learning has stabilized. The implicit gesture learning process **200** can determine that the learning has stabilized by evaluating a confidence level associated with the generated precedential knowledge **126.** The implicit gesture learning process **200** can evaluate the stage of progressive learning process **400** implemented for a given set of features **122** to determine a confidence level. Alternatively, the implicit gesture learning process **200** can determine the history of the self-healing stage **408** being implemented in regards to a particular set of precedential knowledge **126** to generate a confidence level. In one embodiment, the implicit gesture learning process **200** can determine the history of the self-healing stage **408** using unsupervised learning in conjunction with a deep learning process. Unsupervised learning combined with a deep learning process allows the implicit gesture learning process **200** to move from state to state without requiring pre-defined criteria. The implicit gesture learning process **200,** at process block **216,** determining that the learning has been stabilized, can implement an implicit gesture control process **450** at process block **218.**

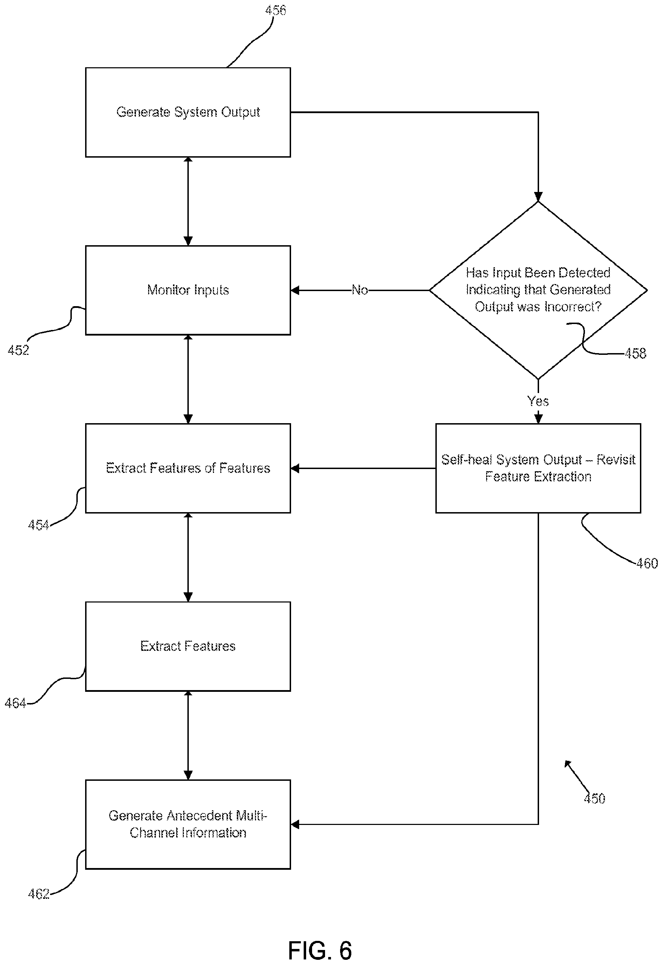

Turning to FIG. 6, an embodiment of an implicit gesture control process **450** can be seen. The implicit gesture control process **450** at process block **452** continues to monitor the plurality of inputs **204.** At process block **454,** the implicit gesture control process **450** can continue to extract features **122** associated with the plurality of inputs **122** when a vehicle output **118** is generated. The vehicle output **118** can be generated by a user at process block **456.** However, where sufficient precedent knowledge **126** is available and the implicit gesture learning process **200** has stabilized, the implicit gesture control process **450** can generate a vehicle output **118** based on the monitored plurality of inputs **204** without waiting for a detected vehicle output **118.** In other words, the implicit gesture control process **450** uses antecedent or precedential knowledge created during the implicit gesture learning process **200,** described above, to generate system outputs based upon the existence of one or more detected features.

Accordingly, the process illustrated in Fig. 2 can be utilized to identify implicit gestures is then defined as learned system-level architectural knowledge propagation associations between occupants and the overall system-level integration of in-vehicle cockpit analytics. Implicit gestures, once identified can be viewed as discriminative associations, in which associations and patterns are learned through repetitive behavior by a user. Outcomes can then be predicted from these unsupervised learned experiences, such that the repetitive behavior, involving multiple input channels triggers output behaviors. Generative associations can then be extracted without explicitly waiting for a system output to be triggered. This process of preempting a system output (e.g., the implicit gesture control process **450** illustrated in FIG. 6) can then be used to reduce the overall amount of time that completing a task requires, and to improve its responsiveness, ultimately resulting in a reduced cognitive load.

Returning to Fig. 6, additionally, at process block **456,** the implicit gesture control process **450** can continue to monitor the vehicle outputs **118,** and, if the implicit gesture control system **100** detects an input **204** indicating that the vehicle output **118** generated by the implicit gesture learning system **450** is incorrect at process block **458,** the implicit gesture control process **450** can initiate a self-healing function **460.** The self-healing function **460** can operate in the same manner as the self-healing stage **408** of the progressive learning process **400.**

In one embodiment, the self-healing function **460** is activated when a user deactivates a vehicle output **118** that was initiated by the implicit gesture control process **450.** The self-healing function **460** can have the implicit gesture learning process **200** generate multi-channel antecedent knowledge **124** at process block **462.** The antecedent knowledge **124** can be used by the implicit gesture learning process **200** at process block **464** to extract additional features **122.** These additional features **122** can subsequently be further extracted at process block **454.** The self-healing function **460** can also directly interface with process block **454** to alter the features **122** extracted at process block **454.** To illustrate, if a passenger is reaching up towards the reading light, the system may believe that, based upon prior, similar actions, the passenger is attempting to turn on the reading light. Based upon that belief, the system may then turn on the reading light for the passenger. If, however, that was not the desired system response (e.g., the passenger was instead reaching up to use the sun visor), the passenger will turn off the light, negating the system output that was just generated by the gesture detection system. The passenger's turning-off of the reading light represents a self-healing action. The self-healing action is then learned by the system and if the decision-making is confused enough, the system will stop trying to learn that particular system output.

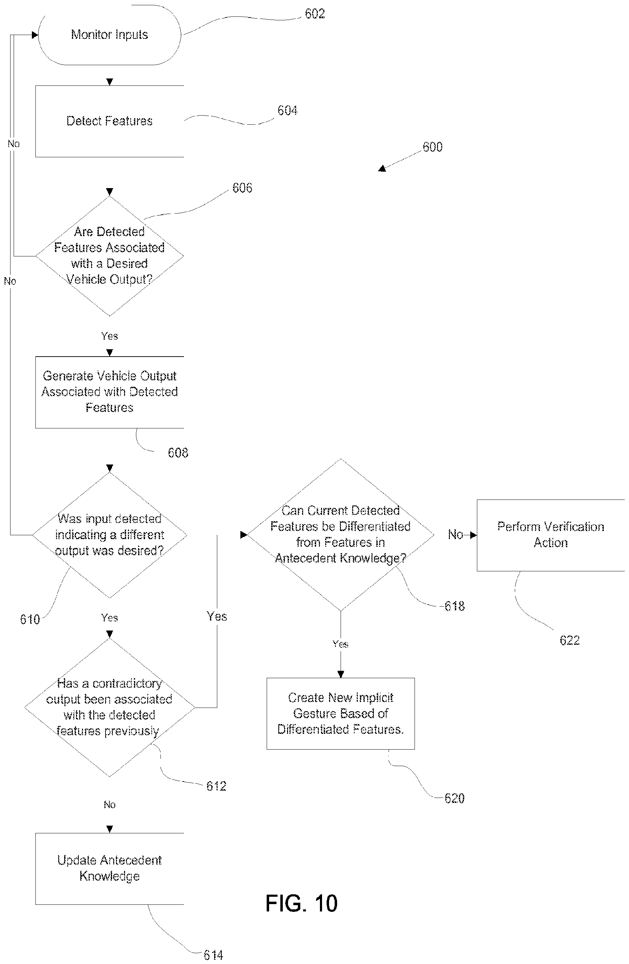

Turning to FIG. 10, a non-limiting example of a self-healing process **600** can be seen. At process step **602** the implicit gesture learning system **100** can monitor the plurality of inputs **204.** At process step **604** the implicit gesture learning system **100** can detect a set of features **122** via the plurality of inputs **204.** At process step **606** the implicit gesture learning system **100** can compare the detected features **122** against the antecedent knowledge **124** to determine if a desired vehicle output **118** is associated with the detected features **122.** Turning now to process step **608,** the implicit gesture learning system **100** can generate a vehicle output **118** associated with the detected features **122.** In this regard, process steps **602, 604, 606** and **608** correspond to an operation of an implicit gesture control process.

At process step **610,** the implicit gesture learning system **100** can further monitor the plurality of inputs **204** to determine if a subsequent input **204** is detected, that indicates that a contradictory or different vehicle output **118** was instead desired by a user. In one embodiment, a contradictory vehicle output **118** can be the user returning the generated vehicle output **118** to a condition prior to the vehicle output **118** being generated by the implicit gesture learning system **100** - that is, the user has effectively cancelled the vehicle output **118** generated by the implicit gesture learning system **100.** Additionally and optionally, a user may then, in addition to canceling the vehicle output generated in step **608,** select a different desired vehicle output **118.** An example of the user indicating a contradictory vehicle output **118** may involve the implicit gesture learning system **100** generating the vehicle output **118** of lowering a driver's side window when the user reaches towards the window controls. This action may be based upon antecedent knowledge **124** that indicates that when the driver reaches towards the window controls, the driver has, historically, activated the window controls to change the state of the driver side window (e.g., lowering the window from a raised position, or raising the window from a lowered position). In this example, however, once the driver's side window has been lowered, the user actually actuates the window controls to raise the driver's side window. This action is, therefore, contradictory to the original vehicle output **118** of lowering the window and triggers a self-healing action, as described below. The user may then choose to not initiate any other outputs, or the user may actuate the switch to lower a passenger window, indicating a contradictory output was desired.

A contradictory vehicle output **118** can also be determined where a user changes the scale of the vehicle output **118** generated at process step **608.** A non-limiting example may be a user increasing the volume of an audio system beyond the increase presented by the implicit gesture learning system **100.** Alternatively, a user may reduce the volume from the level increased by the implicit gesture learning system **100,** thereby indicating a contradictory vehicle output **118.**

In a further embodiment, a contradictory vehicle output **118** may be determined based on the amount of time that had elapsed between the time that the implicit gesture learning system **100** generated the vehicle output **118** and the time when the contradictory vehicle output **118** was detected. As an example, where the user reaches up towards a light, the implicit gesture learning system **100** may turn on the light as an output. Subsequently, the user may turn off the light. The implicit gesture learning system **100** can then evaluate the time between the light being turned on and the user turning the light off. Where the time is less than a pre-determined time period, the implicit gesture learning system **100** may interpret the user turning off the light as a contradictory vehicle output **118** requiring self healing. In contrast, when the time is greater than a pre-determined time period, the implicit gesture learning system **100** may interpret the user turning off the light as a separate action and evaluate the features **112** associated with the user turning off the light as a new implicit gesture. The pre-determined time period used by the implicit gesture learning system **100** can be a parameter set within the implicit gesture learning system **100.** In one embodiment, the pre-determined time period can be determined by the implicit gesture learning process **100.** As such, the pre-determined time period can be evaluated as another feature **112** to be evaluated. By evaluating the pre-determined time period as a feature **112,** the implicit gesture control system **100** can apply different pre-determined time periods to different vehicle outputs **118.**

Once the implicit gesture learning system **100** determines that a contradictory vehicle output **118** is desired, the implicit gesture learning system **100** can evaluate whether a contradictory vehicle output **118** has been previously indicated for the detected features **112** at process block **612.** This may indicate, for example, that the user had to generate the contradictory vehicle output a number of times in the past. If the implicit gesture learning system **100** determines that the contradictory vehicle output **118** has not been previously indicated, the implicit gesture learning system **100** can store the contradictory vehicle output **118** in the antecedent knowledge or otherwise update the antecedent knowledge **124** in step **614** based upon the contradictory vehicle output **118** for future evaluation and take no further action.

In one embodiment, the contradictory vehicle output 118 is stored in the antecedent knowledge **124,** and a deep learning process is implemented to perform a self-healing action on the antecedent knowledge **124.** In a further embodiment, the deep learning process can use a Markovian process to determine if a self-healing action is needed, and, in some cases, to implement the self healing. In alternative implementations, if the implicit gesture learning system **100** determines that the contradictory vehicle output **118** has been associated with the detected features **112** a number of times in the past (e.g., greater than a threshold number of times) the implicit gesture learning system **100** may take a self-healing action. In some embodiments, however, there is no threshold requirement before self-healing will occur. Instead, upon the first instance of detecting a contradictory vehicle output **118,** self-healing, as described below, will be undertaken by the implicit gesture learning system **100.** Furthermore, the implicit gesture learning system **100** can examine other information associated with the indicated contradictory vehicle output **118** to determine if self-healing action should be taken. Non-limiting examples of possible information that can be evaluated by the implicit gesture learning system **100** relating to a contradictory vehicle output **118** to determine whether self-healing should be undertaken can be the time of day the vehicle output **118** occurred; the number of occurrences of the contradictory vehicle output **118;** or the percentage of time that the contradictory vehicle output **118** is detected. It should be known that the implicit gesture learning system **100** can evaluate any other information available to determine if self-healing action should be taken.

The self-healing process involves the implicit gesture learning system **100** incorporating the contradictory vehicle output **118** and features associated with that contradictory vehicle output **118** into the antecedent knowledge. By incorporating this information into the antecedent knowledge, when the same set of features is identified in the future (or the set of features, plus additional information, as described below), the implicit gesture learning system **100** may generate the contradictory or complementary vehicle output **118,** which may more accurately reflect the intent of the user. In performing self-healing, the implicit gesture learning system **100,** can utilize the features **112** that were originally associated with the generated vehicle output **118.** In some cases, though, in addition to utilizing the features **112** that were extracted, the implicit gesture learning system **100** can also utilize additional inputs **204** that were received contemporaneously with the detected features **112,** but may not have been identified as features at the time. In one embodiment, when performing self-healing, the implicit gesture learning system **100** can evaluate the plurality of inputs **204** that were received before and after the features **112** were detected, for example. The implicit gesture learning system **100** can evaluate the plurality of inputs **204** that occurred within a predetermined time window from the time the features **112** were detected. In one embodiment, the pre-determined time period can be about 1 second to about 3 seconds.

The implicit gesture learning system **100,** having evaluated the presented features **112** and, optionally, additional inputs 204, can then determine if additional features **112** can be extracted from the features **112** and inputs **204** to differentiate the current features **112** from the previously extracted features **112** at process block **618.** For example, the current features **112** may differ from the features stored in the antecedent knowledge in association with the generated vehicle output **118** in some manner discernible by the implicit gesture learning system **100.** If the implicit gesture learning system **100** can extract or otherwise identify differentiated features **112,** the implicit gesture learning system **100** can generate a new implicit gesture based on the differentiating features **112** at process block **620.** The new implicit gesture and associated features **112** can then be stored in the antecedent knowledge **124** for future use.

To illustrate, a user may reach towards the vehicle's console generating a set of features **112** that include features **112** associated with the user's arm and hand moving forwards within the vehicle to the console. Upon detecting that set of features **112,** and inputting those features **112** into the deep learning system, the implicit gesture learning system **100** may determine that when the user performs that gesture, it results in the state of the vehicle's air conditioning system being changed. As such, the implicit gesture learning system **100** may change the air conditioning system's state. In this example, though, this is an incorrect vehicle output, since the user was moving in that direction for a different purpose altogether. In this example, the user wanted to adjust the volume of the vehicle's multimedia system. Once the user has adjusted the volume, the implicit gesture learning system **100** may detect that adjustment as a contradictory or complementary vehicle output resulting in initiation of the self-healing process. In this example, the implicit gesture learning system **100** may attempt to distinguish the features **112** that were initially identified. The implicit gesture learning system **100** can attempt to distinguish the features **112** by identifying one or more details of the present features **112** that are not found in the antecedent knowledge **124.** This can be done in an unsupervised manner. The implicit gesture learning system **100** can also attempt to distinguish the features **112** by introducing inputs **204** associated with the feature **112** into a deep learning system that is capable of receiving such multichannel/multimodal inputs **204.**

In this example, the user's fingers are positioned differently between changing the state of the air conditioning system, involving a precedential set of features that are extracted from the event, and encapsulating adjusting volume (involving even more features relevant to having, for instance, multiple outstretched fingers arranged to grasp a volume knob). With features being learned and differentiated between various events being solidified, the implicit gesture learning system **100** can enter the differentiated feature set (outstretched hand with fingers positioned to grasp a knob) into the antecedent knowledge and associate those features with a vehicle output involving an adjustment of audio volume.

In general, any attributes of the input data can be used to distinguish a set of features. In the case of arm gestures, finger configuration, arm and hand position and orientation, and the rate at which a gesture occurs can all be used as inputs **204** for extracting a differentiating feature set **112.** In other cases, similar implicit gestures may be distinguished based upon one or more inputs **204** relating to environmental data. The same events, for example, may be distinguished based upon information such as the time of day, phone usage, a vehicle being stationary or not, etc.

If the implicit gesture learning system **100** cannot extract differentiating features **112** associated with the contradictory vehicle output **118,** the implicit gesture learning system **100** can perform a verification action at process block **622.** In one embodiment, the verification action can comprise the implicit gesture learning system **100** prompting the user to identify which output is desired based on a given set of features **112** making up a particular set of system inputs or to indicate that no action was made or intended. The implicit gesture learning process **100** can also perform a verification action by transmitting the features **112** associated with the contradictory vehicle output **118** to a server via the communication module **114** where it can be further evaluated either in isolation, or in combination with a set of features captured from a large number of vehicles.

In one embodiment, the implicit gesture learning system **100** can also contain system ethos and standards **130** to provide parameters and limits to the decision-making process of the system. The system ethos and standards can disallow the implicit gesture control process **450** from being triggered automatically every time a vehicle output **118** is triggered. This set of system-level ethos and standards can be put into the memory device **120** of the implicit gesture learning system **100** to ensure that the implicit gesture learning system **100** does not encourage or reinforce negative driving behavior. In one embodiment, negative driving behavior can be any activity which would distract the driver from operating the vehicle. In a further embodiment, certain ethos and standards **130** can be triggered based on the presence of adverse driving conditions. Non-limiting examples of adverse driving conditions can be bad weather, slippery conditions, or congested roadways. In one embodiment, the implicit gesture control process **450** may implement certain ethos and standards based on multiple inputs **204** related to the stress level of the driver.

In one embodiment, the gesture system ethos and standards may embody the following rules:
1) Multi-channel input is encouraged to ensure a rich repertoire of feature sets extracted from seemingly disparate resources.
2) A system with safety first in mind.
3) Allowing the driver to focus on driving.
4) Safety of occupant in the vehicle, including human and non-human passengers
5) Monitoring of vital signs for driver, passengers, and other occupants
6) Encouraging hands on the wheel.
7) Encouraging passenger interaction with the different information systems of the vehicle.
8) Encouraging eyes on the road by the driver.
9) Minimizing distraction by the driver.
10) Encouraging a better driving posture.
11) The system is self-healing and can learn from its mistakes through manifestations of user response.
12) If the system is still confused about given outputs, through repeated wrong results, then the system will decide to shut down further attempts until adequate differentiation is available.

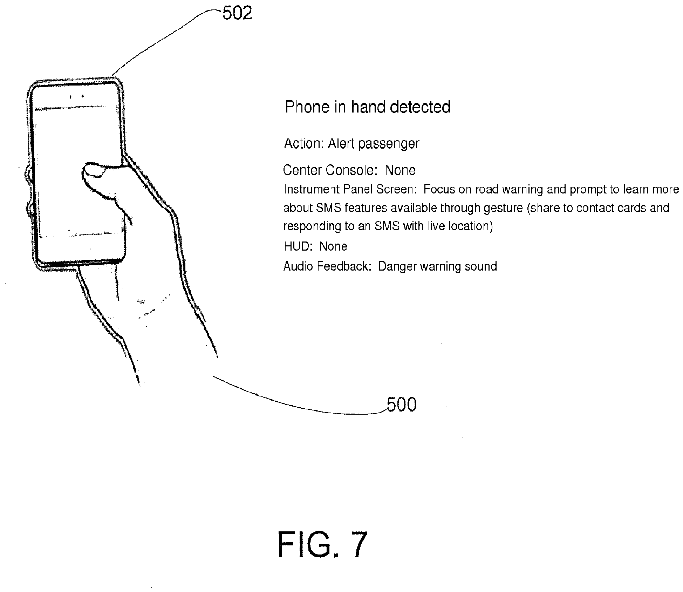

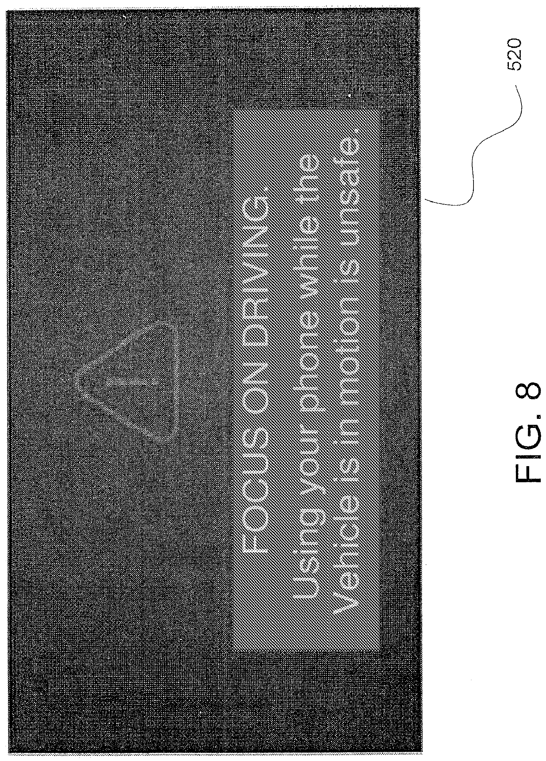

In FIG. 7, a non-limiting example of an application of an implicit gesture learning system **100** in a vehicle can be seen. FIG 7 illustrates the implicit gesture learning system **100** determining an SMS event on a drivers **500** cellular telephone **502.** In one embodiment, the implicit gesture learning system **100** can monitor inputs **204** such as visual detection of the user reaching for the cellular phone **502** and visual detection of the driver's **500** eyes moving away from the road via the visual sensors **104.** The implicit gesture learning system **100** can also monitor information provided by the user's cellular phone **502** indicating that an SMS message has been activated via the communication module **114.** Features **122** of the presented inputs **204** can be extracted and compared to existing antecedent knowledge **124.** In one embodiment, once the implicit gesture learning system **100** learns to detect the SMS event, the implicit gesture learning system **100** can perform certain actions such as display the SMS message on a system display screen that is within the driver's **500** field of view. Alternatively, FIG. 8 shows an embodiment wherein the implicit gesture learning system **100** can display a message **520** on the system display screen to reduce distraction and encourage the driver **500** to move their gaze back to the road.

In another example, a child may be left behind by the owner of a vehicle. After being left behind, the child wakes up, starts crying, and is in a state of distress. In such a set of circumstances, the present system may use relevant environmental sensors **110** to detect and extract various features associated with the baby's voice with the high-pitched tone, for instance, associated facial gestures, and an elevated heart rate, as well as ambient temperature. The system can also use its guiding ethics to drive its decision-making process. The result is a system output of an occupant in distress. Once a distress state has been identified, the system may choose to alert a human or even the owner of the vehicle. Note that the output is initiated by the system in this case, and not by a vehicle occupant. A system can and will initiate an output if one of its guiding ethical principles is violated. In some embodiments, vehicle occupants may have the chance to override some system outputs, depending on the level of safety and certainty that is associated with a particular system output.

In another example, the system may extract features that cause the system to turn on one or more overhead reading lights. In that case, after the system's feature extractor identifies an event associated with turning on a reading light and is done learning any set of features associated with such an event, a vehicle occupant may simply reach up to turn the reading light on, and the system will recognize those features (e.g, the features involving a passenger reaching upwards) and turn the light on before the passenger gets to the light. The passenger can also open a book and begin reading, preempting the system to turn the light on, or the passenger can look up and reach up, preempting the system, after significant feature learning to turn the light on.

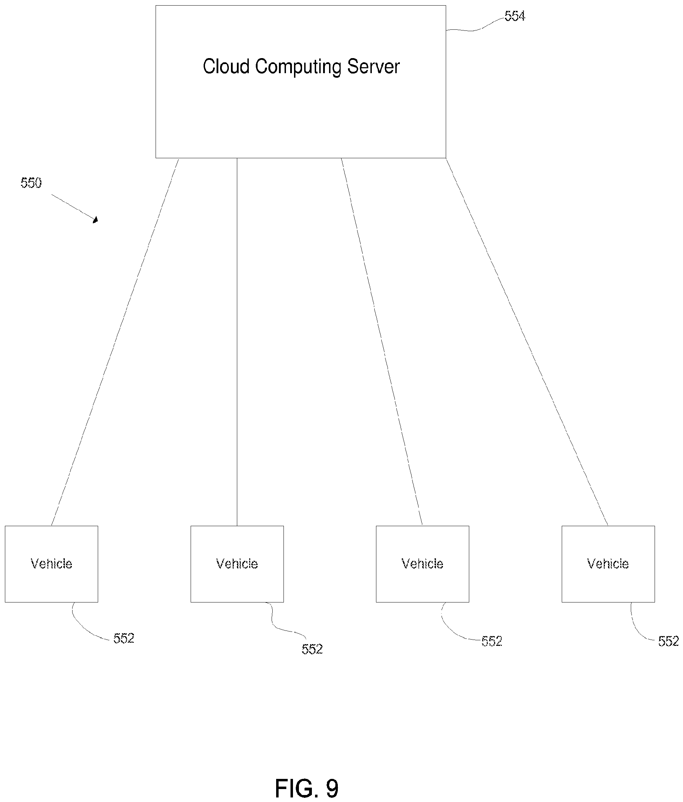

Turning now to FIG. 9, an example of cloud-based integration of implicit gesture learning system **550** can be seen. In one embodiment, a plurality of vehicles **552** can each contain an implicit gesture learning system **100.** The plurality of vehicles **552** containing implicit gesture learning systems **100** can collectively aggregate hundreds of millions of hours of data from millions of drivers and passengers. This data can be transmitted by the plurality of vehicles to a cloud computing server **554** which can analyze the data to better streamline the individual implicit gesture learning systems **100.** In one embodiment, the cloud computing server **554** can communicate to the plurality of vehicles **552** having an implicit gesture learning system **100** via the communication module **114.** The data provided by the cloud computing server **554** can be in the form of features **122,** antecedent knowledge **124,** precedential knowledge **126,** or ethos and standards **130.** The data provided by the cloud computing server **554** can be stored in the memory device **120** of the implicit gesture learning system **100.**

The present system, therefore, provides an advanced cockpit analytics system that can accumulate user data generated by any number of individual users over any number of hours of driving, including any number of interactions. Such data and its analytics component may be employed as a cornerstone for any of the inputs noted above. The herein described feature extractor can therefore effectively work with both precedent and antecedent information, allowing for newly presented information to update any existing feature knowledge. This continual updating of the feature knowledge allows for unsupervised or semi-supervised decision-making at a system level, and classification of previously unknown states at an output level.

The user data being so accumulated may be used in a number of different manners. First, the data may be provided to a centralized implicit gesture learning system to allow for a global adjustment to the implicit gesture recognition system. Thus, knowledge gleaned from any number of individual users may be employed to improve the overall robustness of the system. Next, the accumulated user data may be employed in a more local situation to allow for adjustments in the global implicit gesture recognition system related to one or more particular environmental factors associated with the particular use instance of the system. Thus, in a non-limiting example, it may be desirable to allow for all data accumulated in a particular automobile, home, etc. to be used to adjust one or more global parameters to allow for a more precise application to a particular implementation of the implicit gesture recognition system. Finally, the accumulated data may further be employed to provide adjustments at an individual level. In this non-limiting embodiment, data accumulated for one or more individual users may be further employed to adjust any global or implementation parameters to be further adjusted for each individual user of the system. In this manner, any particular user implementations that are not globally or locally applicable may still be taken into account when determining one or more implicit gestures. Such a hierarchical application of the implicit gesture learning system set forth in accordance with the various embodiments of the invention thus allows for the incorporation of a wide array of accumulated data into the global system, while maintaining implementation and user level detail for ideal implementations in each scenario. This can be seen in more detail below.

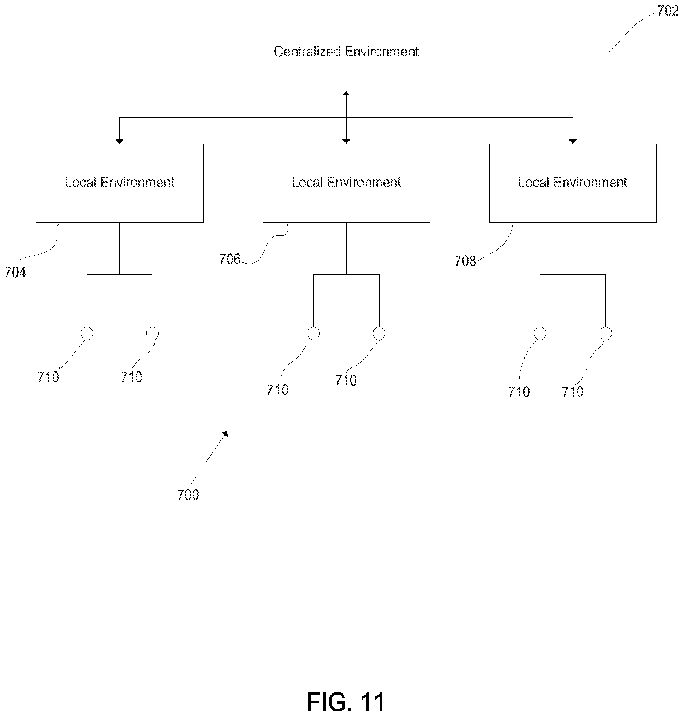

Turning now to FIG. 11, an example of a centralized implicit gesture learning system **700** can be seen. The centralized implicit gesture learning system can include a centralized environment **702.** In one embodiment, the centralized environment **702** can be a cloud-based server. Alternatively, the centralized environment **702** can be a dedicated global server capable of communicating with multiple implicit gesture learning systems **100.**

The centralized environment **702** can be in communication with one or more local environments **704, 706, 708.** In one embodiment, local environments **704, 706, 708** can be individual implicit gesture learning systems **100.** Alternatively, the local environments **704, 706, 708,** can be groupings of similar implicit gesture learning systems **100.** For example, local environments **704, 706, 708** can group implicit gesture learning systems by type. When grouped by type, local environment **704** can be categorized as vehicular, home, commercial, etc. Alternatively, implicit gesture learning systems **100** can be grouped by region, privacy settings, or any other grouping as applicable. While the present example shows three local environments **704, 706, 708,** it should be known that the centralized implicit gesture learning system can comprise more or less than three local environments as needed.

The local environments **704, 706, 708** can be in communication with the centralized environment **702** via a form of electronic communication. In one embodiment, the local environments **704, 706, 708** can communicate with the centralized environment **702** using cellular data communication protocols, such as LTE, 4G, 3G or any cellular data communication as is known in the art. Further, the local environments **704, 706, 708** can communicate with the centralized environment **702** using Wi-Fi technology, such as IEEE 802.11x-type Wi-Fi protocols. In some instances the local environments **704, 706, 708** can communicate with the centralized environment **702** using a wired data connection such as an Ethernet connection. Alternative means of communication between the local environments **704, 706, 708** and the centralized environment **702** can be FM data communication, satellite communication, telephone communication, etc.

Each local environment **704, 706, 708** can include one or more individual users **710.** An individual user **710** can be an occupant of a vehicle, an occupant of a home, or any other user of an implicit gesture learning system **100.** The individual users **710** can directly interact with the implicit gesture learning systems **100** contained within the local environments **704, 706, 708.**

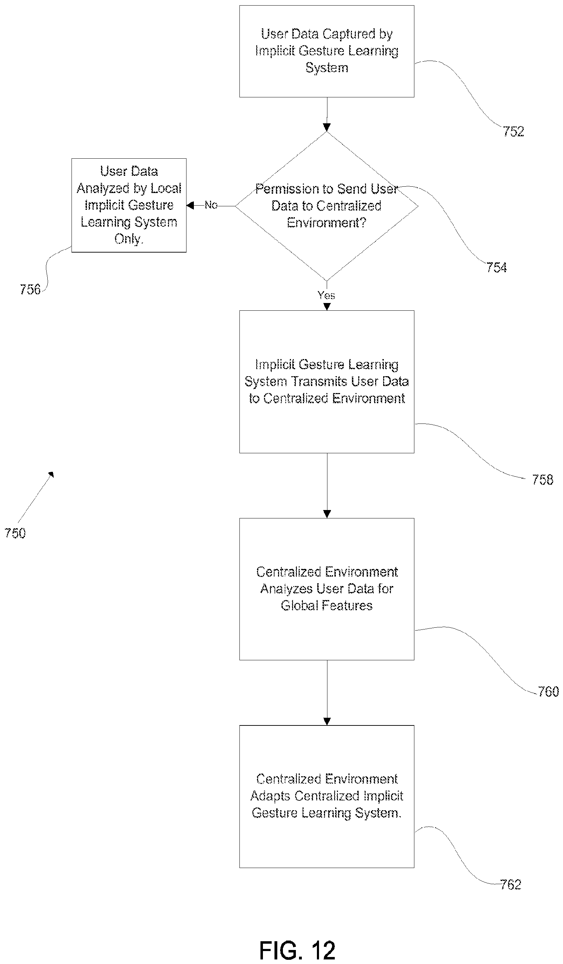

Turning now to FIG. 12, a global system update process **750** can be seen. At process block **752,** user data can be captured by the implicit gesture learning system **100.** In one embodiment, user data can be antecedent knowledge **124** stored in the implicit gesture learning system **100.** Alternatively, the user data can be precedential knowledge **126** stored in the implicit gesture learning system **100.** Furthermore, the user data can be a combination of antecedent knowledge **124** and precedential knowledge **126** stored in the implicit gesture learning system **100.** Additionally, other user data, such as features **122,** ethos and standards **130** or any other data may also be captured by the implicit gesture learning system **100.**

Turning now to process block **754,** the global system update process **750** can determine if the implicit gesture learning system has permission to send the captured user data to the centralized environment **702.** In one embodiment, an individual user **710** can establish permission levels of the implicit gesture learning system **100.** The individual user **710** may be able to establish detailed permission levels based on particular aspects of the implicit gesture learning system **100.** For example, an individual user **710** may disallow any user data to be shared with the centralized environment **702.** The individual user may prohibit data to be shared with the centralized environment **702** to prevent private information from being shared with the centralized environment **702.** Additionally, an individual user **710** can allow for only certain information to be sent to the centralized environment **702.** For example, an individual user **710** may allow only information relating to hand or arm gestures to be transmitted to the centralized environment. Alternatively, an individual user **710** may not allow any information relating to voice identification or facial recognition to be transmitted to the centralized environment **702.** In other instances, the individual user **710** may control permissions associated with other users of the implicit gesture learning system **100.** For example, the individual user **710** can prevent the implicit gesture learning system from sending user data to the centralized environment **702** associated with any occupant in the rear passenger compartment of a vehicle.

The implicit gesture learning system **100,** not having permission to send user data to the centralized environment **702** for further analysis, can use the captured user data to update the implicit gesture control process **200** at an individual implicit gesture control system **100** level, at process block **756.**

The implicit gesture learning system **100,** having permission to send user data at process block **754,** can transmit the captured user data to the centralized environment **702** at process block **758.** The transmission can be initiated at specific times to reduce traffic on the transmission network. In one embodiment, the implicit gesture learning system **100** can transmit user data to the centralized environment whenever new user data is captured. For example, where the implicit gesture learning process **200** inputs a new feature **122** into the antecedent knowledge **126,** the implicit gesture control system **100** can transmit the new user data to the centralized environment **702.** Alternatively, the implicit gesture control system **100** can transmit the new user data to the centralized environment **702** when the self-healing stage **408** alters previously extracted features **122.**

The centralized environment **702,** having received the user data transmitted from the implicit gesture learning system **100,** can analyze the received user data to determine if the user data is applicable to the centralized implicit gesture learning system **700** at process block **760,** i.e, the user data is applicable all implicit gesture learning systems **100** in the centralized implicit gesture learning system **702.** In one embodiment, the centralized environment **702** can aggregate user data from multiple individual users **710** and apply an algorithm to determine which user data is applicable to the centralized implicit gesture learning system **700** as a whole. In one embodiment, this algorithm can utilize a statistical analysis to determine which user data is applicable to the centralized implicit gesture learning system **700.** Alternatively, the algorithm can use a Markovian process to determine which user data is applicable to the centralized implicit gesture learning system **700.** This ability to make global adjustments to multiple implicit gesture learning systems **100** based on user data gathered from any number of individual users may be employed to improve the overall robustness of multiple implicit gesture learning systems **100.** The gathered user data can then be input to the overall implicit gesture learning system, contributing to further knowledge, and potentially modifying the system's overall outcomes over time.

The centralized environment **702,** determining that the received user data is applicable to the centralized implicit gesture learning system **700,** can globally update the centralized implicit gesture learning system **700** by transmitting an updated global parameter to all the implicit gesture control systems **100** connected to the centralized implicit gesture learning process **700.** In one embodiment, the global parameters can modify existing antecedent knowledge **124** and/or precedential knowledge **126.** Additionally, other parameters such as features **122** or ethos and standards **130** can also be updated.

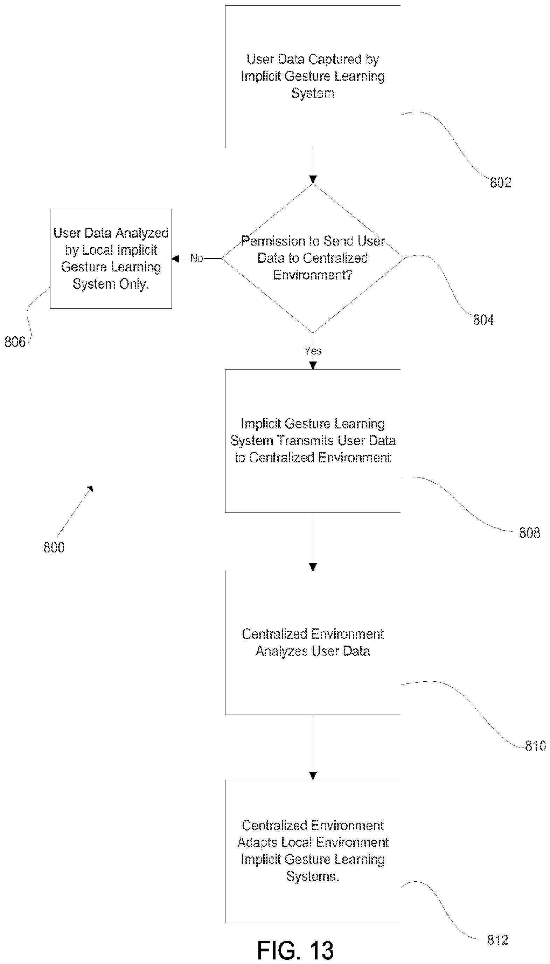

Turning now to FIG. 13, a local environment system update process **800** can be seen. The local environment system update process **800** can be used to provide updates for certain local environments which can be related to one or more particular environmental factors associated with the particular use instance of the system. For example, it may be desirable to allow for all data accumulated in a particular automobile, home, etc. to be used to adjust one or more global parameters to allow for a more precise application to a particular implementation of the implicit gesture recognition system **100.** Thus, it may be advantageous to evaluate user data gathered in home environments differently than user data gathered in vehicular environments due to the different environmental factors associated with each.

At process block **802,** user data can be captured by the implicit gesture learning system **100.** In one embodiment, user data can be antecedent knowledge **124** stored in the implicit gesture learning system **100.** Alternatively, the user data can be precedential knowledge **126** stored in the implicit gesture learning system **100.** Furthermore, the user data can be a combination of antecedent knowledge **124** and precedential knowledge **126** stored in the implicit gesture learning system **100.** Additionally, other user data, such as features **122,** ethos and standards **130** or any other data may also be captured by the implicit gesture learning system **100.**

Turning now to process block **804,** the local environment system update process **800** can determine if the implicit gesture learning system **100** has permission to send the captured user data to the centralized environment **702.** In one embodiment, an individual user **710** can establish permission levels of the implicit gesture learning system **100.** The individual user **710** may be able to establish detailed permission levels based on particular aspects of the implicit gesture learning system **100.** For example, an individual user **710** may disallow any user data to be shared with the centralized environment **702.** The individual user may prohibit data to be shared with the centralized environment **702** to prevent private information from being shared with the centralized environment **702.** Additionally, an individual user **710** can allow for only certain information to be sent to the centralized environment **702.** For example, an individual user **710** may allow only information relating to hand or arm gestures to be transmitted to the centralized environment. Alternatively, an individual user **710** may not allow any information relating to voice identification or facial recognition to be transmitted to the centralized environment **702.** In other instances, the individual user **710** may control permissions associated with other users of the implicit gesture learning system **100.** For example, the individual user **710** can prevent the implicit gesture learning system from sending user data to the centralized environment **702** associated with any occupant in the rear passenger compartment of a vehicle.

The implicit gesture learning system **100,** not having permission to send user data to the centralized environment **702** for further analysis, can use the captured user data to update the implicit gesture control process **200** at an individual implicit gesture control system **100** level, at process block **806.**

The implicit gesture learning system **100,** having permission to send user data at process block **804,** can transmit the captured user data to the centralized environment **702** at process block **808.** The transmission can be initiated at specific times to reduce traffic on the transmission network. In one embodiment, the implicit gesture learning system **100** can transmit user data to the centralized environment **702** whenever new user data is captured. For example, where the implicit gesture learning process **200** inputs a new feature **122** into the antecedent knowledge **126,** the implicit gesture control system **100** can transmit the new user data to the centralized environment **702.** Alternatively, the implicit gesture control system **100** can transmit the new user data to the centralized environment **702** when the self-healing stage **408** alters previously extracted features **122.**

The centralized environment **702,** having received the user data transmitted from the implicit gesture learning system **100,** can analyze the received user data to determine if the associated features are applicable to a local environment **704, 706, 708** at process block **810.** In one embodiment, the centralized environment **702** can aggregate user data from multiple individual users **710** and apply an algorithm to determine which user data is applicable to specific local environments **704, 706, 708..** In one embodiment, this algorithm can utilize a statistical analysis to determine which user data is applicable to the centralized implicit gesture learning system **700.** Alternatively, the algorithm can use a Markovian process to develop more knowledge based on the user data, and ultimately determine which user data is applicable to the centralized implicit gesture learning system **700.** This ability to make global adjustments to particular local environments **704, 706, 708** based on user data gathered from any number of individual users may be employed to improve the overall robustness and precision of multiple implicit gesture learning systems **100.**

The centralized environment **702,** determining that the received user data is applicable to the local environments **704, 706, 708** can globally update the local environments **704, 706, 708** by transmitting updated local parameters to all the implicit gesture control systems **100** associated with each local environment **704, 706, 708..** In one embodiment, the local parameters can modify existing antecedent knowledge **124** and/or precedential knowledge **126.** Additionally, other elements such as features **122** or ethos and standards **130** can also be updated.

In one example, local environment **704** can be associated with vehicular environments, local environment **706** can be associated with home environments, and local environment **708** can be associated with commercial environments. The centralized environment **702,** receiving user data from multiple implicit gesture control systems **100** can parse the user data based on the local environment **704, 706, 708** associated with each of the multiple implicit gesture control systems **100.** The centralized environment **702** can then analyze each of the received user data and determine whether the received user data is globally applicable or, rather, applies to a local environment **704, 706, 708.** Where the user data is related to a vehicular application, such as operating power windows in a vehicle, the centralized environment **702** can update all implicit gesture learning systems **100** associated with vehicular local environment **704.** Similarly, where the user data is related to home applications, such as interfacing with a home entertainment system, the centralized **702** can update all implicit gesture learning systems **100** associated with home local environment **706.** Finally, where the user data is related to commercial applications, such as interfacing with sales displays, the centralized environment **702** can update all implicit gesture learning systems **100** associated with commercial local environment **706.** While the above example illustrates three examples of local environments, **704, 706, 708,** the type and number of local environments can be vary according to the desired application.

Local environments **704, 706, 708** can also be created to create more precise groupings. For example, local environments **704, 706, 708** may all be associated with vehicular applications; however, each local environment **704, 706, 708** may be associated with a particular subset of vehicular applications. As non-limiting examples, local environment **704** may be associated with passenger vehicles, local environment **706** may be associated with commercial vehicles, and local environment **708** may be associated with military or police vehicles. Thus, where the received user data is related to a specific vehicular application, the centralized environment **702** can update all implicit gesture learning systems **100** associated with the relevant local environment **704, 706, 708.** Additionally, in some instances, the centralized environment **702** may determine that the received user data is applicable to more than one local environment **704, 706, 708** and update the relevant local environments **704, 706, 708** accordingly.

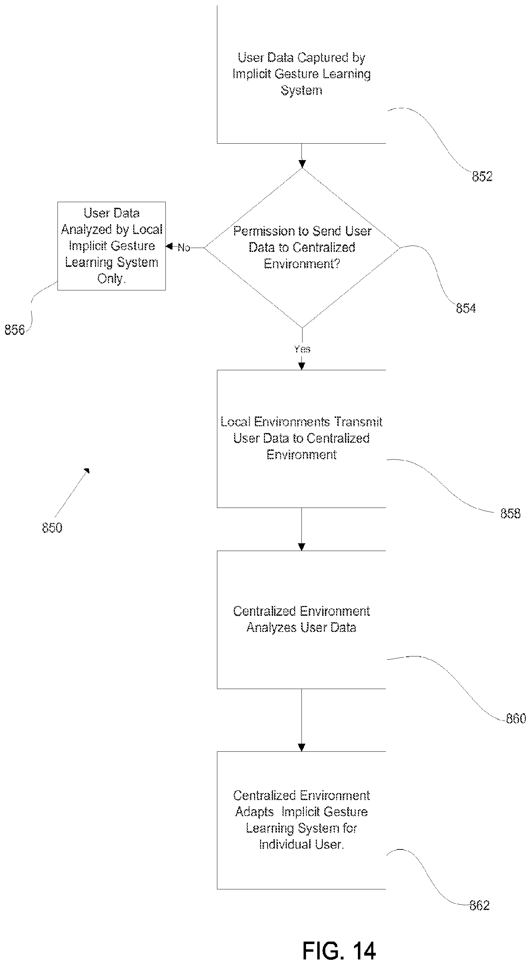

Turning now to FIG. 14, individual user update process **850** can be seen. The individual user update process can be used to provide updates at an individual level. For example, user data associated with an individual user **710** may be used to adjust an individual implicit gesture learning system **100** for an individual user **710.** In this manner, any particular user data that is not globally or locally applicable may still be taken into account when determining one or more implicit gestures for a implicit gesture learning system **100.**

At process block **852,** user data can be captured by the implicit gesture learning system **100.** In one embodiment, user data can be antecedent knowledge **124** stored in the implicit gesture learning system **100.** Alternatively, the user data can be precedential knowledge **126** stored in the implicit gesture learning system **100.** Furthermore, the user data can be a combination of antecedent knowledge **124** and precedential knowledge **126** stored in the implicit gesture learning system **100.** Additionally, other user data, such as features **122,** ethos and standards **130** or any other data may also be captured by the implicit gesture learning system **100.**

Turning now to process block **854,** the individual user update process **850** can determine if there is permission to send the captured user data to the centralized environment **702.** The implicit gesture learning system **100,** not having permission to send user data to the centralized environment **702** for further analysis, can use the captured user data to update the implicit gesture control process **200** at an individual implicit gesture control system **100** level at process block **856.**

The implicit gesture learning system **100,** having permission to send user data at process block **854,** can transmit the captured user data to the centralized environment **702** at process block **858.** The centralized environment **702,** having received the user data transmitted from the implicit gesture learning system **100,** can analyze the received user data to determine if the associated features are applicable to the centralized environment **702** or a local environment **704, 706, 708** at process block **860.** The centralized environment **702,** determining that the user data is not applicable to the centralized environment **702** or a local environment **704, 706, 708** can update a single implicit gesture learning system **100** for an individual user at process block **862** by transmitting an updated individual parameter to the single implicit gesture learning system **100.** In one embodiment, the updated individual parameter can modify existing antecedent knowledge **124** and/or precedential knowledge **126.** Additionally, other elements such as features **122** or ethos and standards **130** can also be updated.

The hierarchical application of the centralized implicit gesture learning system **700** as shown in FIGs 12-14 allows for the incorporation of a wide array of accumulated data into the global system, while maintaining implementation and user level detail for ideal implementations in each scenario.

Furthermore, the implicit gesture learning system **100** can additionally contain one or more tutorial programs to further increase the usability of the system. In one embodiment, a user may initiate a tutorial program in order to better understand all or a portion of a gesture control system. Further, the implicit gesture learning system **100** itself may recognize the need to educate or train a user to allow the user to more effectively utilize the features of a gesture control system. Finally, an implicit gesture learning system **100** may be able to actively teach or suggest certain gestures to a user based on recognized patterns learned over time. This dynamic gesture creation and/or teaching process can provide a user with a richer experience as the user and the system **100** can teach and guide each other to present the user with a highly customizable gesture control system.

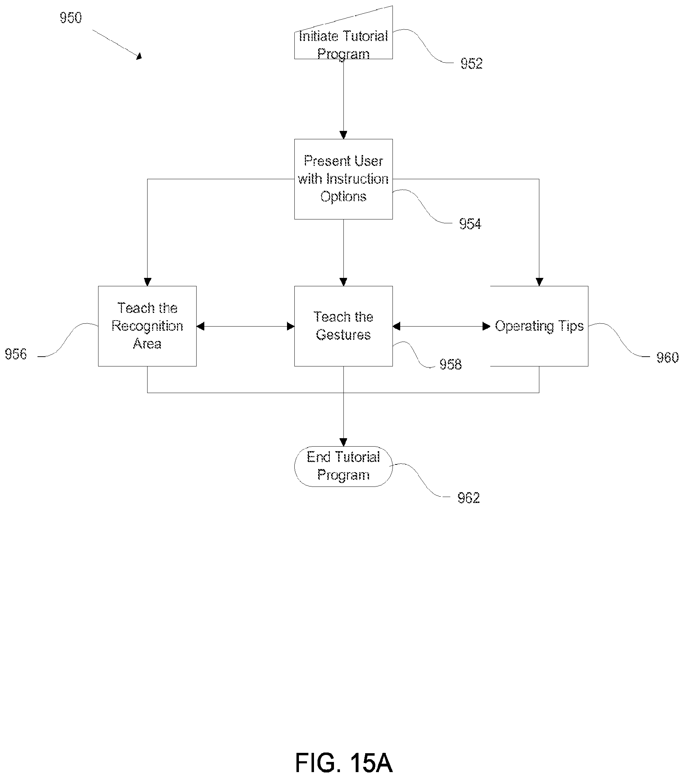

Turning now to FIG. 15A, an example method for providing a user initiated tutorial program **950** can be seen. At process block **952,** a user initiates the tutorial program. In one embodiment, the user can initiate the tutorial program via a manual input, such as a "tutorial" button associated with the implicit gesture learning system **100.** Alternatively, the user may initiate the tutorial program using a gesture such as a hand motion or a voice command. The user-initiated tutorial program **950,** having been initiated at process block **952,** can then present the user with instruction options at process block **954.** In one embodiment, the implicit gesture learning system **100** can present the instruction options to the user via audio feedback, such as audio instructions transmitted through the audio system of a vehicle via the vehicle interface module **116.** Alternative, the implicit gesture learning system **100** can present the instruction options to the user via a visual display. For example, an infotainment system in a vehicle could be used to display the instruction options to the user. In one embodiment, the user-initiated tutorial program **950** can present instruction options to teach the user a gesture recognition area or a plurality of pre-defined gestures; further, the user initiated tutorial program **950** can present an instruction option to provide useful tips to the user.

The user initiated tutorial program **950,** upon the user selecting the option to teach the recognition area, can teach the recognition area at process block **956.** In one embodiment, the user initiated tutorial program **950** may teach the user by illuminating a colored light if the user's hand is in the field of view of the visual sensors **104** and an alternatively colored light when the user's hand is not in the field of view of the visual sensors **104.** For example, where the user's hand is in the field of view of the visual sensors **104** (i.e., the user's hand is in a location that can be observed by the system), the user initiated tutorial program **950** may illuminate a green light; and where the user's hand is not in the field of view of the visual sensors **104,** the user-initiated tutorial program **950** may illuminate a red light. Alternatively, the user initiated tutorial program **950** may provide an audio signal when the user's hand is in the field of view of the camera. The user initiated tutorial program may further provide a second audio signal when the user's hand is in the field of view of the camera. Additionally, the user initiated tutorial program **950** may visually display the field of view of the visual sensors **104** on a display device, such as an infotainment system in a vehicle. The display may be taken from the point of view of the visual sensors **104,** enabling the user to see what the visual sensors **104** see and more accurately position the user's hand within the field of view of the visual sensors **104.** Further, the user-initiated tutorial program **950** can combine audio or visual indications with the visual display of the visual sensors **104** field of view, helping to ensure that gestures are conducted in the recognition area.

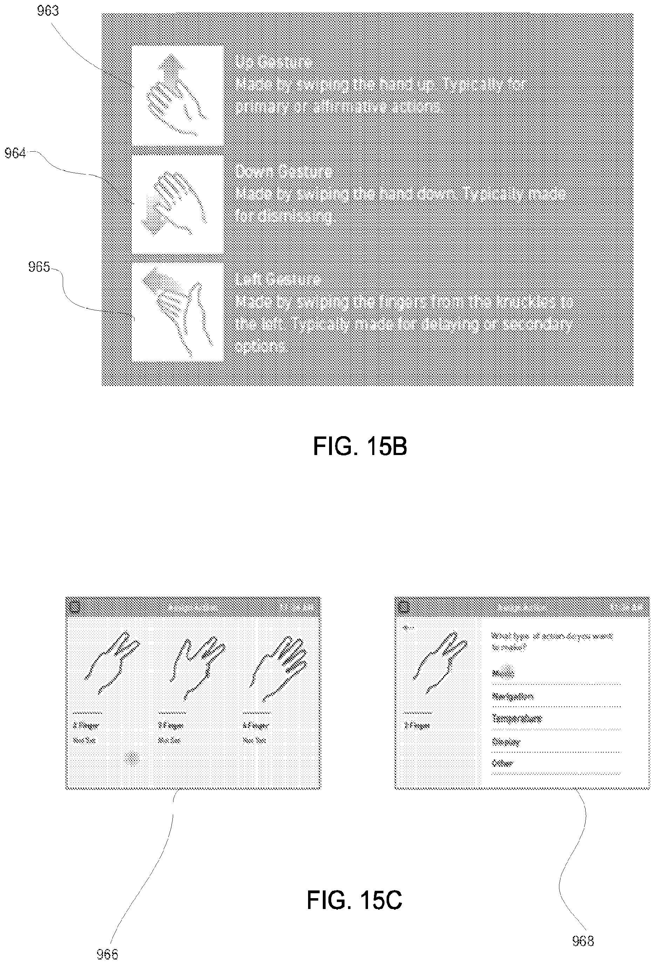

The user initiated tutorial program **950,** upon the user selecting the option to teach the plurality of pre-defined gestures, can teach the plurality of pre-defined gestures to the user at process block **958.** In one embodiment, the user initiated tutorial program **950** can teach a plurality of pre-determined gestures to a user for specific function. For example, the implicit gesture learning system **100** may have certain gestures pre-associated with certain commonly-used actions, such as increasing the volume of an infotainment system, or placing a phone call. However, it should be known that many different actions could be pre-associated with a given gesture. Additionally, the user initiated tutorial program **950** can teach a plurality of pre-determined gestures to a user for basic gesture-based operations. FIG. 15B shows a presentation of three gestures that can be associated with basic gesture-operations, such as the up gesture **963,** the down gesture **964** and the left gesture **965** shown in FIG. 15B. Each gesture **963, 964, 965** shown in FIG. 15C can be associated with basic gesture operations. As an example, up gesture **963** can be associated with "primary" or "affirmative" actions.

Alternatively, the user initiated tutorial program **950** can allow a user to select certain gestures from a pre-determined list and allow the user to choose a particular action to be associated with a given gesture. For example, a user may select a pre-determined gesture, such as a right-to-left swiping gesture, and associate that gesture with an action such as scrolling through pre-set radio stations. Additionally, the user-initiated tutorial program **950** may be able to visually present pre-determined gestures to the user using a display device. The user initiated tutorial program **950** may, in some examples, present the plurality of pre-determined gestures to the user using a still image or a sequence of still images. Alternatively, the user initiated tutorial program **950** may present the plurality of pre-determined gestures to the user using an animated or pre-recorded video. FIG. 15C shows an example implementation of allowing a user to select certain gestures from a pre-determined list. In FIG. 15C, a gesture selection screen **966** can present a plurality of gestures for a user to select from. A user can select one of the gestures in the gesture selection screen **966,** for example, the gesture "2 Finger." Once the user has selected the desired gesture, an action selection display **968** can be presented to the user with a plurality of actions. The user can then subsequently select an action to associate with the previously selected gesture.

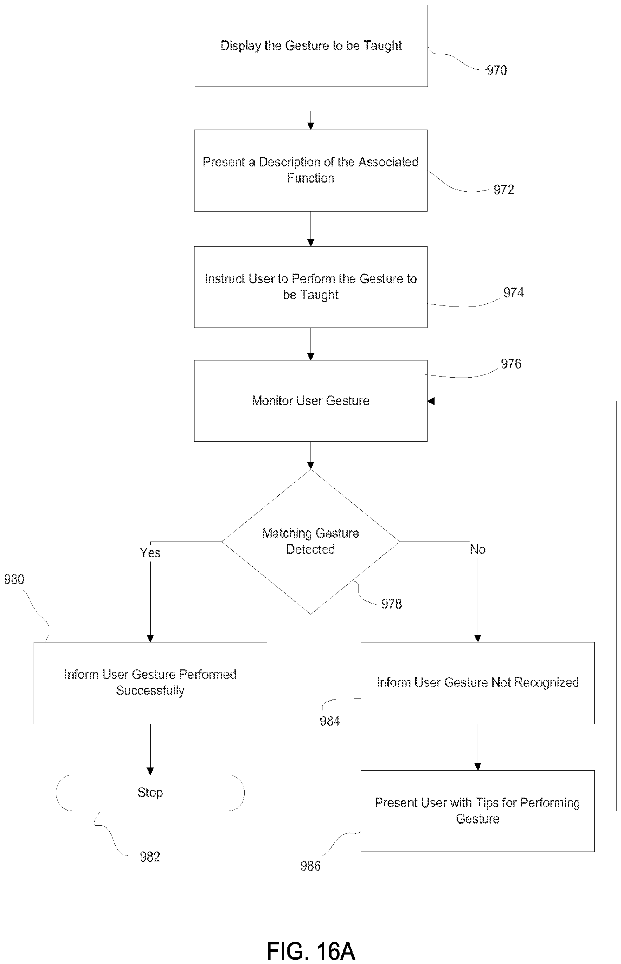

Turning briefly to FIG. 16A, an example process for teaching a predetermined gesture can be seen. At process block **970,** the user initiated tutorial program **950** can teach a pre-determined gesture to a user for a function by first visually displaying a representation of the predetermined gesture to the user using a display device. In one example, the user initiated tutorial program **950** can display the representation of the predetermined gesture using a vehicle infotainment system. In one embodiment, the representation of the predetermined gesture can be a still image. Alternatively, the representation of the predetermined gesture can be an animated image, showing the gesture being performed. It should be known that any type of visual representation that can be displayed can be used to provide a representation of the gesture. At process block **972** a description of the associated function (e.g. turning the volume up on the infotainment system) can be provided to the user. In one embodiment, the description of the associated function can be visually displayed to the user using the infotainment system. The description can be a text description, a pictorial description or a combination thereof. Alternatively, the description of the associated function can be provided to the user via audio feedback. Additionally, the description of the associated function can be provided to the user both visually and audibly.

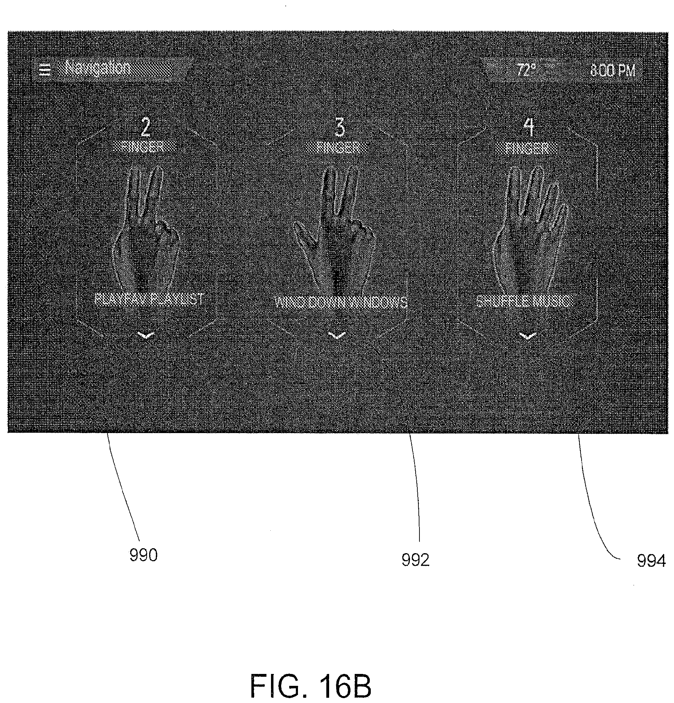

FIG. 16B provides an exemplary illustration showing possible pre-determined gestures **990, 992, 994** that can be presented by the user initiated tutorial program **950** at process block **970** for the functions "Play Favorite Playlist" **990,** "Wind Down Windows" 992 and "Shuffle Music" **994.** As shown in FIG. 16B, "Play Favorite Playlist" **990** can be associated with using a two finger gesture, "Wind Down Windows" **992** can be associated with using a three finger gesture, and "Shuffle Music" **994** can be associated with using a four finger gesture. In one embodiment, the user can select one of the possible pre-determined gestures **990, 992, 994,** and the user initiated tutorial program **950** can provide a detailed description of the associated function at process block **972.**

Turning now to process block **974** the user initiated tutorial program **950** can instruct the user to perform the predetermined gesture. The user initiated tutorial program **950** can instruct the user to perform the predetermined gesture using an audio command. Alternatively, the user initiated tutorial program **950** can instruct the user to perform the predetermined gesture visually using the infotainment system. The user initiated tutorial program **950** can monitor for the user to perform the predetermined gesture at process block **976.** In one embodiment, the user initiated tutorial program can monitor for the user to perform the predetermined gesture using the visual sensors **104.** The user initiated tutorial program **950** can then determine if a gesture matching the predetermined gesture has been detected at process block **978.** The gesture matching the predetermined gesture being detected, the user initiated tutorial program **950** can inform the user that they have performed the predetermined gesture successfully at process block **980.** Once the user has performed the predetermined gesture successfully, the user initiated tutorial program **950** can stop teaching that particular predetermined gesture at process block **982.**

Where the gesture matching the predetermined gesture is not recognized at process block **978,** the user initiated tutorial program **950** can inform the user that the predetermined gesture was not recognized at process block **984.** In one embodiment, the user initiated tutorial program **950** can inform the user via an audio signal that the predetermined gesture was not recognized. Alternatively, the user initiated tutorial program **950** can inform the user via a visual indication that the predetermined gesture was not recognized. After informing the user that the predetermined gesture was not recognized, the user initiated tutorial program **950** can present the user with tips for performing the predetermined gesture at process block **986.** For example, the user initiated tutorial program **950** may suggest that the user perform the predetermined gesture at a different speed. Alternatively, the user initiated tutorial program **950** may suggest that the user orient their hand a different way. Further, the user initiated tutorial program **950** may instruct the user to place their hand in a different location when performing the gesture when the user initiated tutorial program **950** determines that the user's hand is not fully in the field of view of the visual sensors **104.** However, it should be known that the tips presented by the user initiated tutorial program may be any tip which can improve the probability that the gesture is recognized. After presenting the user with tips for performing the predetermined gesture at process block **986,** the user initiated tutorial program **950** can continue monitoring for the predetermined gesture at process block **976.** Alternatively, the user initiated tutorial program **950** may present the user with an option to try again or to stop the user imitated tutorial program **950** after presenting the user with tips for performing the predetermined gesture at process block **986.**

Returning now to FIG. 15A, the user-initiated tutorial program **950,** upon the user selecting the option to teach the gestures, can also present a user with operating tips at process block **960.** In one example, the operating tips can be suggestions such as performing gestures slowly. In a further example, the operating tips can provide additional information relating to teaching new gestures to the implicit gesture learning system **100.** These operating tips can be pre-determined and stored in the implicit gesture learning system **100** at the time of manufacture. Alternatively, the operating tips can be updated over time. For example, where the implicit gesture learning system **100** can communicate over a network such as Wi-Fi or via a cellular network (3G, 4G, LTE, etc), updates can be downloaded into the user initiated tutorial program to provide additional operational tips as they become available. Additionally, operating tips can be outputs associated with an implicit gesture. For example, the operating tips can turn on an overhead lamp as the user approaches the button or switch responsible for operating the overhead lamp, such that the user can eventually learn to point in the direction of the overhead lamp button or switch in order to operate the overhead lamp.

A user can select any of the above instruction options in any order. Further, in one embodiment, a user could have access to the other instruction options while in a first instruction option. For example, the user-initiated tutorial program **950** may be teaching the recognition area at process block **956.** Subsequently, the user can then instruct the user-initiated tutorial program **950** to move on to teaching the plurality of pre-determined gestures at process block **958.** Additionally, the user initiated tutorial program **950** can present the user with an option to move to another instruction option when the current instruction option is completed. For example, the user initiated tutorial program **950** completing the instruction option of teaching the plurality of pre-defined gestures at process block **958** can then proceed to providing the user with operating tips at process block **960.** The user initiated tutorial program can make this transition automatically, or, alternatively, can ask a user if they would like to proceed to the next instruction option. Finally, the user initiated tutorial program **950** ends at process block **962.** The user-initiated tutorial program **950** can end when all of the instruction options are complete. Further, the user-initiated tutorial program **950** may also end when the implicit gesture control system determines that it is unsafe to perform the tutorial, such as when a vehicle is in motion. Alternatively, the user-initiated tutorial program **950** can end when a user terminates the tutorial.

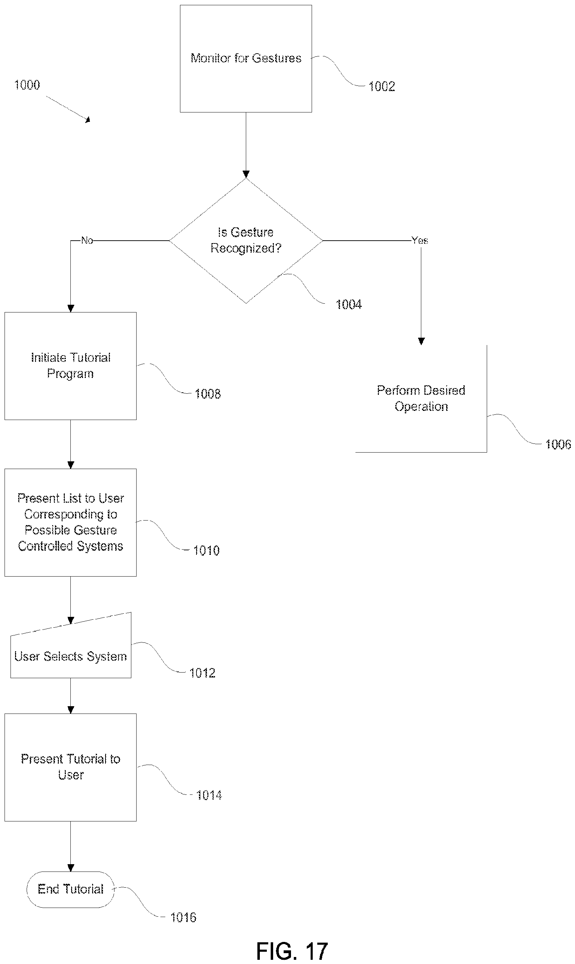

Turning now to FIG. 17, an example method for implementing a tutorial program **1000** can be seen. At process block **1002,** the implicit gesture learning system **100** can monitor for pre-defined gestures to be made by a user. In one embodiment, the pre-defined gestures can be common gestures pre-defined in the implicit gesture learning system **100.** However, the pre-defined gestures could also be previously learned implicit gestures. At process block **1004,** the implicit gesture control system **100** can determine if the gesture is recognized, and, if so, perform the desired operation associated with the recognized gesture at process block **1006.**

Where the implicit gesture learning system **100** fails to recognize the gesture, it can initiate the system initiated tutorial program **1000** at process block **1008.** The system initiated tutorial program **1000** can present a list of possible desired operations to the user that correspond to possible gesture control systems at process block **1010.** The list of possible desired operations can be visually presented to the user via a visualization device, such as a vehicle infotainment system. In one embodiment, the system-initiated tutorial program **1000** can select a limited list of operations to present to a user that are similar in nature to the gesture detected by the implicit gesture control system **100.** Additionally, the system-initiated tutorial program **1000** may use other available data to determine which gestures to present to the user. In one embodiment, the system-initiated tutorial program **1000** may look at the most recent vehicle system activated prior to or after an unrecognized gesture is detected. The system-initiated tutorial **1000** may then present a user with a list of gesture options that correspond to performing an action associated with the most recent vehicle system activation at process block **1010.** For example, where an incoming phone call has been detected prior to the unrecognized gesture being detected, the system initiated tutorial program **1000** may present the user, at process block **1010,** with a list of options that correspond to performing an action associated with an incoming phone call, such as answering and/or declining the incoming call. Alternatively, the system initiated tutorial **1000** may present the user with infrequently used commands which with the user may be unfamiliar. Additionally, the system-initiated tutorial program **1000** can present a list of the systems that can be controlled by the implicit gesture learning system **100** and allow the user to select systems and associated subsystems through a tree-type structure until the desired operation is selected.

At process block **1012** the user can select the desired operation. In one embodiment, the user can select the desired operation using a verbal command. Alternatively, the user can select the desired operation from a list of displayed operations. For example, a user can select the desired operation from a list of possible operations on a touch-screen enabled device, such as a vehicle infotainment system. Alternatively, a user can select a system that allows for gesture control. For example, a user can select a system such as a climate control system that is able to be controlled by gesture control.

Once the user selects a desired system or operation at process block **1012,** the system-initiated tutorial program **1000** can present a tutorial to the user that corresponds to the system or operation selected by a user at process block **1014.** For example, if a user selects a desired operation of "increase the passenger compartment temperature," the system initiated tutorial program may present the user with a tutorial that illustrates only how to use gestures to increase the cabin temperature. Alternatively, or in conjunction with, the system may then present the user with other related gestures commands, such as lower the passenger compartment temperature, recirculate, defrost, etc. The user may then select one of the related commands and the system initiated tutorial program **1000** will again present the user with a tutorial based on the user's input. Where a user selects a desired system instead of a distinct operation, the system initiated tutorial program **1000** can present the tutorial associated with using gesture control with the selected system at process block **1014.** For example, if a user selects the climate control system, the system initiated tutorial program **1000** can present the tutorial associated with using the climate control system in general, cycling through all of the pre-determined gesture commands associated with operating the climate control system.

The system initiated tutorial program **1000,** upon presenting the required tutorial to the user at process block **1014,** can then end the tutorial at process block **1016.** Alternatively, a user may manually cancel or end the system initiated tutorial process **1000,** thereby ending the tutorial at process block **1016.**

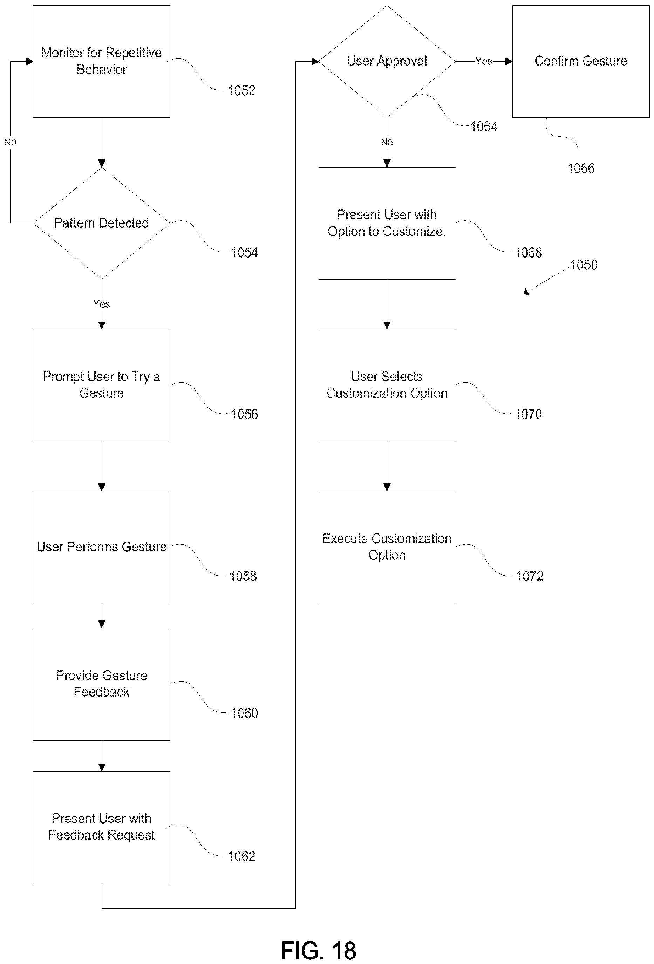

Turning now to FIG. 18, an example method for implementing a smart tutorial program **1050** can be seen. At process block **1052,** the smart tutorial program **1050,** using the implicit gesture learning system **100,** can monitor user actions for repetitive behavior. In one embodiment, the smart tutorial program **1050** can monitor user action for repetitive behavior by monitoring a plurality of system inputs **204.** For example, a user may perform certain repetitive tasks using a vehicle infotainment system associated with their daily drive home from work. The user may immediately check traffic information using the navigation system, resulting in a navigation system being active. The user may then text a spouse to inform them that they are on their way home, resulting in a phone system being active. Finally, the user may then select a music channel, resulting in a music/entertainment system being active. The smart tutorial program **1050** can monitor this behavioral data over time and eventually identify behavioral patterns. At process block **1054,** the smart tutorial program **1050** can determine if a behavioral pattern has been detected. If no behavioral pattern has been detected, the smart tutorial program **1050** will continue to monitor user behavior at process block **1052.**

In one embodiment, the smart tutorial program **1050** may detect a behavioral pattern at process block **1054,** correlating actions taken at approximately the same time every day. For example, checking the traffic conditions every workday at approximately 5 p.m.. Thus, over the course of several days, the smart tutorial program may be able determine a behavioral pattern.

The smart tutorial program **1050,** detecting a pattern, may then prompt the user to try a gesture at process block **1056.** For example, the smart tutorial program **1050** may output an audio signal to inform the user that a suggestion is going to be presented. The audio signal could be a simple tone, or a voice prompt such as "try this!" Subsequently, the smart tutorial program **1050** can display a suggested gesture to the user. In one embodiment, the gesture can be presented to the user using a visual display device, such as the visual display in a vehicle infotainment system. For example, the smart tutorial program **1050** may instruct the user to try a gesture such as drawing the letter "V" in the air using a finger. However, the smart tutorial program **1050** could suggest any number of gestures recognizable by the implicit gesture learning system. Alternatively, the smart tutorial program **1050** may prompt the user to use an audio gesture. For example, the smart tutorial program **1050** may instruct the user to say the word "home."

The user, being presented with the prompt to perform a gesture by the smart tutorial program **1050** can perform the suggested gesture at process block **1058.** At process block **1060,** the smart tutorial program **1050** can provide gesture feedback. In one embodiment, the smart tutorial program **1050** can provide gesture feedback by performing one or more actions associated with the suggested gesture. In the example above of the user driving home after work, the smart tutorial program **1050** can direct the implicit gesture learning system **100** to execute one or a series of actions based on the detected patterns. Continuing with the above example, the smart tutorial program **1050** may have the implicit gesture control system **100** first execute plotting the route home using a navigation system and factoring in available traffic information. Next, the smart tutorial program **1050** may have the implicit gesture control system **100** then execute the phone system so that the user can send a message to their spouse to let them know they are on their way home. In one embodiment, the smart tutorial program **1050** can have the implicit gesture learning system **100** prepare a draft text message for the user with a standard message based on previously detected messages. Further, the smart tutorial program **1050** can have the implicit gesture control system **100** prepare a draft text message to inform a user's spouse that they are on their way home and further provide an estimated time of arrival based on the current traffic conditions. Finally, the smart tutorial program **1050** can then direct the implicit gesture learning system **100** to execute the music menu to allow the user select a desired music/entertainment channel. Further, if the smart tutorial program **1050** has sufficient data, it can tune the music system to the desired music channel based on previously detected patterns. In one embodiment, the smart tutorial program **1050** may evaluate the current time and past music channel selections and present the user with a desired music/entertainment channel.

After the smart tutorial program **1050** provides gesture feedback at process block **1060,** it can then present the user with a feedback request at process block **1062.** In one embodiment, the smart tutorial program **1050** can request feedback by having the user respond as to whether they approve of the suggested gesture. Alternatively, the smart tutorial program **1050** can request feedback by having the user respond as to whether they approved of the actions performed as a result of the gesture. The smart tutorial program **1050** can also ask for feedback for both the suggested gesture and the actions performed as a result of the gesture.

Once the user has been provided with a feedback request at process block **1062,** the user can then choose to approve or not approve the gesture and/or the associated actions at process block **1064.** If the user approves the gesture and/or the associated actions at process block **1064,** the smart tutorial program **1050** can confirm the gesture and/or associated actions at process block **1066.** By confirming the gesture and/or associated actions, the smart tutorial program can associated one or more actions that correspond to the gesture, such that if the gesture is detected, the one or more actions associated with the gesture can be executed by the implicit gesture learning system **100.** Additionally. once the gesture and/or associated actions are confirmed, the smart tutorial program **1050** can place the gesture and associated actions into the memory **120** of the implicit gesture learning system **100** for future execution. The gesture and associated actions can also be stored in a database once the gesture and/or associated actions are confirmed. In one embodiment, the database can be located on a cloud based server **554.** Alternatively, the database can be located on-board the vehicle, such as in the memory **120.**

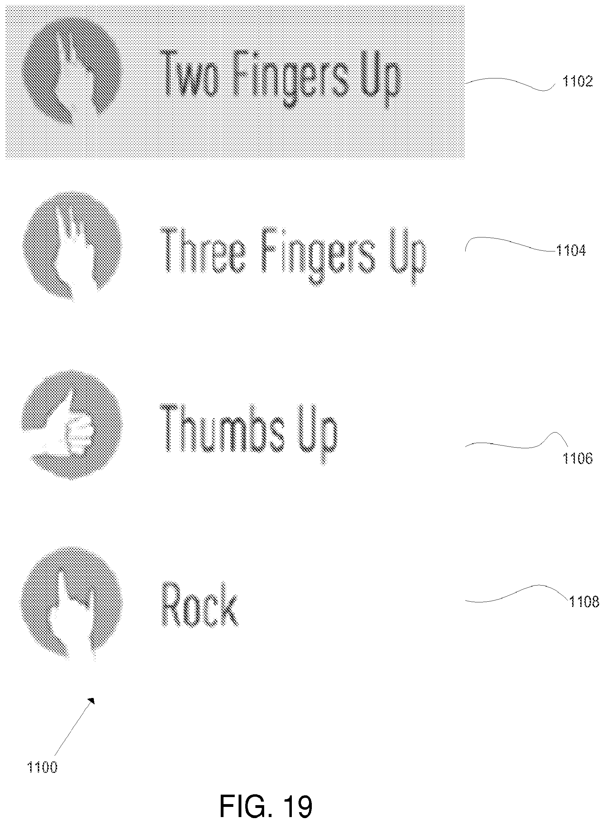

If the user, at process block **1064,** does not approve of the gesture, the smart tutorial program **1050** can present the user with options to customize the gesture at process block **1068.** In one embodiment, if the user does not approve of the gesture at process block **1064,** the smart tutorial system **1050** can present the user with the option to choose a different gesture from a list of predetermined gestures stored in the memory **120** of the implicit gesture learning system **100.** These pre-determined gestures can be presented to a user visually as a grid of predefined gesture glyphs. Turning briefly to FIG. 19, an example grid of predefined gesture glyphs **1100** can be seen. Example predefined gesture glyphs **1100** can include "Two Fingers Up" **1102,** "Three Fingers Up" **1104,** "Thumbs Up" **1106** and "Rock" **1108.** Returning to FIG. 18, the user can then select a desired gesture glyph at process block **1070** and the smart tutorial program **1050** will then execute the selected customization option at process block **1072.** The smart tutorial program **1050** can execute the selected customization option by storing the selected gesture glyph into the memory **120** along with the associated actions to be executed when the gesture is recognized.

Alternatively, if the user does not approve of the actions associated with the suggested gesture, the smart tutorial program **1050** can present the user with options to customize the associated actions at process block **1068.** In one embodiment, if the user does not approve of the actions associated with the suggested gesture, the smart tutorial program **1050** can visually present each of the associated actions to the user. The user can then select and modify the associated actions at process block **1070** using an input device such as the touch screen device. Alternatively, the user can select and modify the associated actions at process block **1070** using n audio input such as a voice command. In a further embodiment, the user may also be able to add or delete associated actions. Once the user has completed selecting the desired customization of the associated actions, the smart tutorial program **1050** can execute the selected customization options at process block **1072.**

Finally, the user can also select, at process block **1068** to not accept the suggested gesture and associated actions at all. Where the user has chosen not to accept the suggested gesture and associated action at process block **1068,** the smart tutorial program **1050** can cancel the gesture and associated actions at process block **1072.** In one embodiment, where the implicit gesture learning system **100** is capable of distinguishing between users, the smart tutorial program **1050** can remember that it should not suggest a particular gesture to a user, where the user has indicated they do not wish to use gesture control.

The tutorial programs of the implicit gesture learning system **100** shown in FIGs 15-18 allows for a user to have a more personal relationship with a gesture controlled system, such as a vehicle. By presenting the user with tutorial programs, the user feels more involved as they can help to teach and guide the system to accommodate the user's needs. Further tutorial programs help to highlight available features while educating a user as to their functionality.

Various embodiments of the present invention may be embodied in many different forms, including, but in no way limited to, computer program logic for use with a processor (e.g., a microprocessor, micro controller, digital signal processor, server computer, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof.

Computer program logic implementing all or part of the functionality previously described herein may be embodied in various forms, including, but in no way limited to, a source code form, a computer executable form, and various intermediate forms (e.g., forms generated by an assembler, compiler, linker, or locator). Source code may include a series of computer program instructions implemented in any of various programming languages (e.g., an object code, an assembly language, or a high-level language such as C, C++, or JAVA) for use with various operating systems or operating environments. The source code may define and use various data structures and communication messages. The source code may be in a computer executable form (e.g., via an interpreter), or the source code may be converted (e.g., via a translator, assembler, or compiler) into a computer executable form.

The various embodiments of the invention may be extended to areas outside of the automobile. For example, any implicit action performed by a user may be employed to determine an input corresponding to one or more desired outputs. Furthermore, any indirect or implicit corrective action performed by the user may be further employed to self-heal the system in a manner corresponding to the corrective action. Thus, by way of a non-limiting example, if a user gets out of bed at night and walks down a hallway, a light in a room at the end of the hallway may be switched on. If the user then turns off the light in the room at the end of the hallway, and instead turns on the light in the bathroom, the system is able to correct its initial action and substitute the alternative action in future iterations by learning and integrating a set of features that are associated with such actions. Such features may be spatio-temporal or they may be frequency based. They may also be extracted in a separate feature-rich space based on any number of salient information. Of course, if any distinction between the user's action when turning on the light in the room and the light in the bathroom can be discerned, it is possible to classify the user actions as two different inputs, thereby resulting in two different outputs.

Thus, any number of inputs from any number of users via the Internet of Things/Connected Devices may be employed. Thus, by further non-limiting example, inputs received by any number of sensors in the home or car of a user may be employed to give a more complete picture of the implicit actions of the user, and thereby provide a more advanced system for classifying action, and for healing any artificial intelligence system, resulting in improved system performance and better user experiences.

The computer program may be fixed in any form (e.g., source code form, computer executable form, or an intermediate form) in a tangible storage medium, such as a semiconductor memory device (e.g., a RAM, ROM, PROM, EEPROM, or Flash-Programmable memory), a magnetic memory device (e.g., a diskette or fixed disk), an optical memory device (e.g., a CD-ROM), a PC card (e.g., PCMCIA card), or other memory device. The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Programmable logic may be fixed either permanently or temporarily in a tangible storage medium, such as a semiconductor memory device (e.g., a RAM, ROM, PROM, EEPROM, or Flash-Programmable memory), a magnetic memory device (e.g., a diskette or fixed disk), an optical memory device (e.g., a CD-ROM), or other memory device. The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

The present disclosure describes preferred embodiments with reference to the Figures, in which like numbers represent the same or similar elements. Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," and similar language throughout this specification may, but do not necessarily, all refer to the same embodiment.

The described features, structures, or characteristics of the invention may be combined in any suitable manner in one or more embodiments. In the description, numerous specific details are recited to provide a thorough understanding of embodiments of the invention. One skilled in the relevant art will recognize, however, that the invention may be practiced without one or more of the specific details, or with other methods, components, materials, and so forth. In other instances, well-known structures, materials, or operations are not shown or described in detail to avoid obscuring aspects of the invention.

The schematic flow chart diagrams included are generally set forth as logical flow-chart diagrams. As such, the depicted order and labeled steps are indicative of one embodiment of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow-chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown. Some embodiments provided for are described as computer-implemented method claims. However, one of ordinary skill in the art would realize that the method steps may be embodied as computer code and the computer code could be placed on a tangible, non-transitory computer readable medium defining a computer program product.

## Claims

1. A method for enabling a learning implicit gesture control by an occupant (500) of a vehicle, wherein an implicit gesture includes at least one input from the occupant (500) of the vehicle, the method comprising:
identifying a first set of features (122) in a first input (204) received from at least one of a plurality of sensors (104, 106, 108, 110, 112), the first input including the implicit gesture, wherein the first set of features (122) is associated with a first vehicle output (118), the first vehicle output (118) including activation of a feature of at least one of a plurality of systems of the vehicle; and
comparing the first set of features (122) to an antecedent knowledge (124) stored in a memory device, the antecedent knowledge (124) including a plurality of previously extracted and stored features (122) associated with a given system output action, to identify a system output action corresponding to the first set of features (122) and the first vehicle output (118), the system output action being configured to cause the first vehicle output (118),
**characterized in that** the method further comprises:
detecting a second vehicle output (118) upon detecting a subsequent second input (204) received from at least one of the plurality of sensors (104, 106, 108, 110, 112), the second input including at least one input from the occupant of the vehicle (500) and indicating that the first vehicle output (118) is incorrect, wherein the second vehicle output (118) is different from the first vehicle output (118); and
updating the antecedent knowledge (124) to associate the system output action with the second vehicle output (118).

2. The method of claim 1, wherein the antecedent knowledge (124) is only updated when the second vehicle output (118) occurs within a predetermined time period of the system output action being identified.

3. The method of claim 1, wherein the antecedent knowledge (124) includes knowledge stored from deep learning through a generalist network, a specialist network, and a monitor network.

4. The method of claim 1, wherein the plurality of sensors (104, 106, 108, 110, 112) include visual sensors (104).

5. The method of claim 1, wherein the plurality of sensors (104, 106, 108, 110, 112) include audio sensors (106).

6. The method of claim 1, wherein the system output action includes modifying a status of at least one of the plurality of systems of the vehicle.

7. The method of claim 6 wherein the plurality of systems of the vehicle include at least one of a reading light, a navigation system, and a telecommunications system.

8. An implicit gesture learning system (100), wherein an implicit gesture includes at least one input from an occupant (500) of a vehicle, the system comprising:
a plurality of sensors (104, 106, 108, 110, 112) coupled to the vehicle;
a processor (102) operatively connected for communication with the vehicle, a plurality of systems of the vehicle and the plurality of sensors (104, 106, 108, 110, 112);
the processor (102) being configured to:
receive a plurality of inputs (204) from the plurality of sensors (104, 106, 108, 110, 112);
identify a first set of features (122) in a first input (204) included in the plurality of inputs (204) received from the plurality of sensors (104, 106, 108, 110, 112), the first input including the implicit gesture, wherein the first set of features (122) is associated with a first vehicle output (118), the first vehicle output (118) including activation of a feature of at least one of the plurality of systems of the vehicle; and
compare the first set of features (122) to an antecedent knowledge (124) stored in a memory device, the antecedent knowledge (124) including a plurality of previously extracted and stored features (122), to identify a system output action corresponding to the first set of features (122) and the first vehicle output (118), the system output action being configured to cause the first vehicle output (118),
**characterized in that** the processor (102) is further configured to:
detect a second vehicle output (118) upon detecting a subsequent second input from the plurality of inputs (204) received from the plurality of sensors (104, 106, 108, 110, 112), the second input including at least one input from the occupant of the vehicle (500) and indicating that the first vehicle output (118) is incorrect, wherein the second vehicle output (118) is a different vehicle output (118) than the first vehicle output (118); and
update the antecedent knowledge (124) to associate the system output action with the second vehicle output (118).

9. The system (100) of claim 8, wherein the processor (102) is configured to only update the antecedent knowledge (124) when the second vehicle output (118) occurs within a predetermined time period of the system output action being generated.

10. The system (100) of claim 8, wherein the plurality of previously extracted and stored features (122) are associated with a given system output (118).

11. The system (100) of claim 8, wherein the antecedent knowledge (124) includes knowledge (124) stored from deep learning through a generalist network, a specialist network, and a monitor network.

12. The system (100) of claim 8, wherein the plurality of sensors (104, 106, 108, 110, 112) include visual sensors (104).

13. The system (100) of claim 8, wherein the plurality of sensors (104, 106, 108, 110, 112) include audio sensors (106).

14. The system (100) of claim 8, wherein the the system output action includes modifying a status of at least one of the plurality of systems of the vehicle.

15. The system (100) of claim 14, wherein the plurality of systems of the vehicle include at least one of a reading light, a navigation system, and a telecommunications system.

## Patentansprüche

1. Verfahren zum Ermöglichen einer lernenden implizite Geste-Steuerung/Regelung durch einen Insassen (500) eines Fahrzeugs, wobei eine implizite Geste wenigstens eine Eingabe von dem Insassen (500) des Fahrzeugs umfasst, wobei das Verfahren umfasst:
Identifizieren eines ersten Satzes von Merkmalen (122) in einer ersten Eingabe (204), die von wenigstens einem von einer Mehrzahl von Sensoren (104, 106, 108, 110, 112) empfangen wird, wobei die erste Eingabe die implizite Geste umfasst, wobei der erste Satz von Merkmalen (122) einer ersten Fahrzeugausgabe (118) zugeordnet ist, wobei die erste Fahrzeugausgabe (118) eine Aktivierung eines Merkmals von wenigstens einem von einer Mehrzahl von Systemen des Fahrzeugs umfasst; und
Vergleichen des ersten Satzes von Merkmalen (122) mit einem in einer Speichervorrichtung gespeicherten vorausgehenden Wissen (124), wobei das vorausgehende Wissen (124) eine Mehrzahl von zuvor extrahierten und gespeicherten Merkmalen (122) umfasst, die einer gegebenen Systemausgabeaktion zugeordnet sind, um eine dem ersten Satz von Merkmalen (122) und der ersten Fahrzeugausgabe (118) entsprechende Systemausgabeaktion zu identifizieren, wobei die Systemausgabeaktion dazu konfiguriert ist, die erste Fahrzeugausgabe (118) zu bewirken,
**dadurch gekennzeichnet, dass** das Verfahren ferner umfasst:
Erfassen einer zweiten Fahrzeugausgabe (118) nach Erfassen einer nachfolgenden zweiten Eingabe (204), die von wenigstens einem der Mehrzahl von Sensoren (104, 106, 108, 110, 112) empfangen wird, wobei die zweite Eingabe wenigstens eine Eingabe von dem Insassen des Fahrzeugs (500) umfasst und anzeigt, dass die erste Fahrzeugausgabe (118) falsch ist, wobei sich die zweite Fahrzeugausgabe (118) von der ersten Fahrzeugausgabe (118) unterscheidet; und
Aktualisieren des vorausgehenden Wissens (124), um die Systemausgabeaktion der zweiten Fahrzeugausgabe (118) zuzuordnen.

2. Verfahren nach Anspruch 1, wobei das vorausgehende Wissen (124) nur aktualisiert wird, wenn die zweite Fahrzeugausgabe (118) innerhalb einer vorbestimmten Zeitperiode nach der Identifizierung der Systemausgabeaktion auftritt.

3. Verfahren nach Anspruch 1, wobei das vorausgehende Wissen (124) Wissen umfasst, das aus Deep Learning durch ein generalistisches Netzwerk, ein spezialisiertes Netzwerk und ein Überwachungsnetzwerk gespeichert wurde.

4. Verfahren nach Anspruch 1, wobei die Mehrzahl von Sensoren (104, 106, 108, 110, 112) visuelle Sensoren (104) umfassen.

5. Verfahren nach Anspruch 1, wobei die Mehrzahl von Sensoren (104, 106, 108, 110, 112) Audiosensoren (106) umfassen.

6. Verfahren nach Anspruch 1, wobei die Systemausgabeaktion ein Modifizieren eines Status von wenigstens einem der Mehrzahl von Systemen des Fahrzeugs umfasst.

7. Verfahren nach Anspruch 6, wobei die Mehrzahl von Systemen des Fahrzeugs ein Leselicht und/oder ein Navigationssystem und/oder ein Telekommunikationssystem umfassen.

8. Implizite Geste-Lernsystem (100), wobei eine implizite Geste wenigstens eine Eingabe von einem Insassen (500) eines Fahrzeugs umfasst, wobei das System umfasst:
eine Mehrzahl von Sensoren (104, 106, 108, 110, 112), die mit dem Fahrzeug gekoppelt sind;
einen Prozessor (102), der betriebsmäßig zur Kommunikation mit dem Fahrzeug, einer Mehrzahl von Systemen des Fahrzeugs und der Mehrzahl von Sensoren (104, 106, 108, 110, 112) verbunden ist;
wobei der Prozessor (102) konfiguriert ist zum:
Empfangen einer Mehrzahl von Eingaben (204) von der Mehrzahl von Sensoren (104, 106, 108, 110, 112);
Identifizieren eines ersten Satzes von Merkmalen (122) in einer ersten Eingabe (204), die in der Mehrzahl von Eingaben (204) enthalten ist, die von der Mehrzahl von Sensoren (104, 106, 108, 110, 112) empfangen werden, wobei die erste Eingabe die implizite Geste umfasst, wobei der erste Satz von Merkmalen (122) einer ersten Fahrzeugausgabe (118) zugeordnet ist, wobei die erste Fahrzeugausgabe (118) eine Aktivierung eines Merkmals von wenigstens einem der Mehrzahl von Systemen des Fahrzeugs umfasst; und
Vergleichen des ersten Satzes von Merkmalen (122) mit einem in einer Speichervorrichtung gespeicherten vorhergehenden Wissen (124), wobei das vorhergehende Wissen (124) eine Mehrzahl von zuvor extrahierten und gespeicherten Merkmalen (122) umfasst, um eine Systemausgabeaktion zu identifizieren, entsprechend dem ersten Satz von Merkmalen (122) und der ersten Fahrzeugausgabe (118), wobei die Systemausgabeaktion konfiguriert ist, um die erste Fahrzeugausgabe (118) zu bewirken,
**dadurch gekennzeichnet, dass** der Prozessor (102) ferner konfiguriert ist zum:
Erfassen einer zweiten Fahrzeugausgabe (118) beim Erfassen einer nachfolgenden zweiten Eingabe von der Mehrzahl von Eingaben (204), die von der Mehrzahl von Sensoren (104, 106, 108, 110, 112) empfangen werden, wobei die zweite Eingabe wenigstens eine Eingabe von dem Insassen des Fahrzeugs (500) umfasst und anzeigt, dass die erste Fahrzeugausgabe (118) falsch ist, wobei die zweite Fahrzeugausgabe (118) eine andere Fahrzeugausgabe (118) als die erste Fahrzeugausgabe (118) ist; und
Aktualisieren des vorausgehenden Wissens (124), um die Systemausgabeaktion der zweiten Fahrzeugausgabe (118) zuzuordnen.

9. System (100) nach Anspruch 8, wobei der Prozessor (102) konfiguriert ist, das vorausgehende Wissen (124) nur dann zu aktualisieren, wenn die zweite Fahrzeugausgabe (118) innerhalb einer vorbestimmten Zeitperiode nach dem Erzeugen der Systemausgabeaktion auftritt.

10. System (100) nach Anspruch 8, wobei die Mehrzahl von zuvor extrahierten und gespeicherten Merkmalen (122) einer gegebenen Systemausgabe (118) zugeordnet sind.

11. System (100) nach Anspruch 8, wobei das vorausgehende Wissen (124) Wissen (124) umfasst, das aus Deep Learning durch ein generalistisches Netzwerk, ein spezialisiertes Netzwerk und ein Überwachungsnetzwerk gespeichert wurde.

12. System (100) nach Anspruch 8, wobei die Mehrzahl von Sensoren (104, 106, 108, 110, 112) visuelle Sensoren (104) umfassen.

13. System (100) nach Anspruch 8, wobei die Mehrzahl von Sensoren (104, 106, 108, 110, 112) Audiosensoren (106) umfassen.

14. System (100) nach Anspruch 8, wobei die Systemausgabeaktion ein Modifizieren eines Status von wenigstens einem der Mehrzahl von Systemen des Fahrzeugs umfasst.

15. System (100) nach Anspruch 14, wobei die Mehrzahl von Systemen des Fahrzeugs ein Leselicht und/oder ein Navigationssystem und/oder ein Telekommunikationssystem umfassen.

## Revendications

1. Procédé pour permettre une commande de gestes implicites d'apprentissage par un occupant (500) d'un véhicule, dans lequel un geste implicite inclut au moins une entrée de la part de l'occupant (500) du véhicule, le procédé comprenant :
l'identification d'un premier ensemble de paramètres (122) dans une première entrée (204) reçue à partir d'au moins l'un d'une pluralité de capteurs (104, 106, 108, 110, 112), la première entrée incluant le geste implicite, dans lequel le premier ensemble de paramètres (122) est associé à une première sortie du véhicule (118), la première sortie du véhicule (118) incluant l'activation d'un paramètre d'au moins l'un d'une pluralité de systèmes du véhicule ; et
la comparaison du premier ensemble de paramètres (122) à une connaissance (124) antérieure stockée dans un dispositif de mémoire, la connaissance (124) antérieure incluant une pluralité de paramètres (122) préalablement extraits et stockés associés à une action donnée de sortie du système, pour identifier une action de sortie du système correspondant au premier ensemble de paramètres (122) et à la première sortie du véhicule (118), l'action de sortie du système étant configurée pour provoquer la première sortie du véhicule (118),
**caractérisé en ce que** le procédé comprend en outre :
la détection d'une seconde sortie du véhicule (118) lors de la détection d'une seconde entrée ultérieure (204) reçue à partir d'au moins l'un de la pluralité de capteurs (104, 106, 108, 110, 112), la seconde entrée incluant au moins une entrée de la part de l'occupant du véhicule (500) et indiquant que la première sortie du véhicule (118) est incorrecte, dans lequel la seconde sortie du véhicule (118) est différente de la première sortie du véhicule (118) ; et
l'actualisation de la connaissance (124) antérieure pour associer l'action de sortie du système à la seconde sortie du véhicule (118).

2. Procédé selon la revendication 1, dans lequel la connaissance (124) antérieure n'est actualisée que lorsque la seconde sortie du véhicule (118) se produit dans une période de temps prédéterminée de l'action de sortie du système étant identifiée.

3. Procédé selon la revendication 1, dans lequel la connaissance (124) antérieure inclut une connaissance stockée à partir d'un apprentissage profond à travers un réseau généraliste, un réseau spécialiste et un réseau de surveillance.

4. Procédé selon la revendication 1, dans lequel la pluralité de capteurs (104, 106, 108, 110, 112) incluent des capteurs visuels (104).

5. Procédé selon la revendication 1, dans lequel la pluralité de capteurs (104, 106, 108, 110, 112) incluent des capteurs audio (106).

6. Procédé selon la revendication 1, dans lequel l'action de sortie du système inclut la modification d'un statut d'au moins l'un de la pluralité de systèmes du véhicule.

7. Procédé selon la revendication 6, dans lequel la pluralité de systèmes du véhicule incluent au moins l'un d'une lampe de lecture, d'un système de navigation et d'un système de télécommunications.

8. Système (100) d'apprentissage de gestes implicites, dans lequel un geste implicite inclut au moins une entrée de la part d'un occupant (500) d'un véhicule, le système comprenant :
une pluralité de capteurs (104, 106, 108, 110, 112) couplés au véhicule ;
un processeur (102) connecté de manière opérationnelle pour la communication avec le véhicule, une pluralité de systèmes du véhicule et la pluralité de capteurs (104, 106, 108, 110, 112) ;
le processeur (102) étant configuré pour :
recevoir une pluralité d'entrées (204) à partir de la pluralité de capteurs (104, 106, 108, 110, 112) ;
identifier un premier ensemble de paramètres (122) dans une première entrée (204) incluse dans la pluralité d'entrées (204) reçues à partir de la pluralité de capteurs (104, 106, 108, 110, 112), la première entrée incluant le geste implicite, dans lequel le premier ensemble de paramètres (122) est associé à une première sortie du véhicule (118), la première sortie du véhicule (118) incluant l'activation d'un paramètre d'au moins l'un de la pluralité de systèmes du véhicule ; et
comparer le premier ensemble de paramètres (122) à une connaissance (124) antérieure stockée dans un dispositif de mémoire, la connaissance (124) antérieure incluant une pluralité de paramètres (122) préalablement extraits et stockés, pour identifier une action de sortie du système correspondant au premier ensemble de paramètres (122) et à la première sortie du véhicule (118), l'action de sortie du système étant configurée pour provoquer la première sortie du véhicule (118),
**caractérisé en ce que** le processeur (102) est en outre configuré pour :
détecter une seconde sortie du véhicule (118) lors de la détection d'une seconde entrée ultérieure à partir de la pluralité d'entrées (204) reçues à partir de la pluralité de capteurs (104, 106, 108, 110, 112), la seconde entrée incluant au moins une entrée de la part de l'occupant du véhicule (500) et indiquant que la première sortie du véhicule (118) est incorrecte, dans lequel la seconde sortie du véhicule (118) est une sortie du véhicule (118) différente de la première sortie du véhicule (118) ; et
actualiser la connaissance (124) antérieure pour associer l'action de sortie du système à la seconde sortie du véhicule (118).

9. Système (100) selon la revendication 8, dans lequel le processeur (102) est configuré pour n'actualiser la connaissance (124) antérieure que lorsque la seconde sortie du véhicule (118) se produit dans une période de temps prédéterminée de l'action de sortie du système étant générée.

10. Système (100) selon la revendication 8, dans lequel la pluralité de paramètres (122) préalablement extraits et stockés sont associés à une sortie donnée du système (118).

11. Système (100) selon la revendication 8, dans lequel la connaissance (124) antérieure inclut une connaissance (124) stockée à partir d'un apprentissage profond à travers un réseau généraliste, un réseau spécialiste et un réseau de surveillance.

12. Système (100) selon la revendication 8, dans lequel la pluralité de capteurs (104, 106, 108, 110, 112) incluent des capteurs visuels (104).

13. Système (100) selon la revendication 8, dans lequel la pluralité de capteurs (104, 106, 108, 110, 112) incluent des capteurs audio (106).

14. Système (100) selon la revendication 8, dans lequel l'action de sortie du système inclut la modification d'un statut d'au moins l'un de la pluralité de systèmes du véhicule.

15. Système (100) selon la revendication 14, dans lequel la pluralité de systèmes du véhicule incluent au moins l'un d'une lampe de lecture, d'un système de navigation et d'un système de télécommunications.
